# EUROPEAN PATENT APPLICATION

(11) **EP 4 159 094 A1**
(43) Date of publication of application: **05.04.2023**
(21) Application number: 21814398.0
(22) Date of filing: 06.04.2021
(51) Int. Cl.: A47J 27/00, A47J 27/56

(54) **KITCHEN APPLIANCE**

(30) Priority: 29.05.2020 CN 202020947106 U; 29.05.2020 CN 202020946996 U; 29.05.2020 CN 202020947065 U; 29.05.2020 CN 202020947172 U; 29.05.2020 CN 202020945770 U; 29.05.2020 CN 202020945717 U; 19.11.2020 CN 202022687296 U
(71) Applicant: Chunmi Technology (shanghai) Co., Ltd., Shanghai 201203 (CN)
(72) Inventor: YANG, Hua, Shanghai 201203 (CN); CHEN, Huashan, Shanghai 201203 (CN); ZHANG, Tao, Shanghai 201203 (CN); ZHENG, Xiuqian, Shanghai 201203 (CN); YANG, Youru, Shanghai 201203 (CN)
(74) Representative: Cabinet Beau de Loménie
(86) International application number: PCT/CN2021/085582
(87) International publication number: WO 2021/238413

(57) **Abstract**

The present disclosure relates to an overflow structure applicable to a kitchen appliance, disposed in a mainframe of the kitchen appliance, a motor being assembled in the mainframe, wherein a mainframe upper cover is disposed above the motor, and the mainframe upper cover is connected to the mainframe as a whole piece and is used to place a container cup assembly, a shaft of the motor is connected to a clutch assembly for power transmission, a base is installed at a lower end of the mainframe, wherein the overflow structure includes: a mainframe-upper-cover drainage structure including at least one side drainage hole opened at an edge of the mainframe upper cover, and a first water receiving part for transferring liquid in the side drainage hole; an interference drainage structure including a water receiving tray for receiving liquid overflowing from a gap between the clutch assembly and the mainframe upper cover, and a second water receiving component for transferring liquid in the water receiving tray. The present disclosure adopts a variety of drainage means to drain water and improve safety in use.

## Description

### TECHNICAL FIELD

The present disclosure relates to the field of mechanical and electronic technology, and more particularly, to a kitchen appliance.

### BACKGROUND

A stir-frying machine is a new generation of microcomputer-controlled intelligent cooking apparatus. The apparatus is generally convenient, simple to operate, and produces no oil fume. The stir-frying machine not only can achieve automatic feeding, seasoning, stir-frying, temperature control, cleaning, discharging, but also has functions of stirring, frying, cooking, deep-frying, blasting, braising, steaming, boiling, brazing, stewing, and casseroling in one pot, making it easy to automate and make the cooking process more interesting. For the existing stir-frying machine product on the market, if the user accidentally pours water from the cup into the mainframe or the user forgets to install the blade holder into the cup and then pour the water, it tends to cause the mainframe to be soaked in water for a large area. An existing solution is to increase the size of a side drainage hole. However, large-area accumulated water cannot be discharged by the side drainage hole quickly. At that time, the accumulated water may overflow through a gap between a clutch and a mainframe upper cover, causing the motor to fail or safety problems due to water entering in the motor.

Therefore, in view of the above problems, the present disclosure provides an overflow structure applicable to a kitchen appliance, which adopts a variety of drainage means to drain water and improve safety in use, which has important practical significance.

### SUMMARY

In order to solve the above-mentioned problems in the prior art, the present disclosure provides an overflow structure applicable to a kitchen appliance, which adopts a variety of drainage means to drain water and improve safety in use.

The technical solution adopted by the present disclosure to solve this problem is as follows.

A kitchen appliance, including an overflow structure disposed in a mainframe of the kitchen appliance, a motor being assembled in the mainframe, wherein a mainframe upper cover is disposed above the motor, and the mainframe upper cover is connected to the mainframe as a whole piece and is used to place a container cup assembly for food handling, a shaft of the motor is connected to a clutch for power transmission, a base is installed at a lower end of the mainframe, wherein the overflow structure includes:
a mainframe-upper-cover drainage structure including at least one side drainage hole opened at an edge of the mainframe upper cover, and a first water receiving part for transferring liquid in the side drainage hole;
an interference drainage structure including a water receiving tray for receiving liquid overflowing from a gap between the clutch and the mainframe upper cover, and a second water receiving component for transferring liquid in the water receiving tray.

Further preferably, the first water receiving part includes a base drainage pipe vertically installed on the base, and a water receiving pipe inserted into the upper end of the base drainage pipe, and a lower end of the side drainage hole is tightly connected with an opening end of the water receiving pipe through a transfer structure. The base drainage pipe extends through the base.

Further preferably, the transfer structure includes an inclined transfer bottom surface formed by bending at least once along one side edge of the side drainage hole, a connecting surface connected between the transfer bottom surface and other edge of the drainage hole, and an opening end of the transfer structure faces the water receiving pipe.

Further preferably, the opening end of the water receiving pipe faces the transfer structure and closely connected to the opening end of the transfer structure.

Preferably, the water receiving tray includes a receiving tray surface and a tray wall extending upward along an edge of the receiving tray surface, one side of the tray wall is formed with a water receiving notch, and a water guiding lip extends downward from an edge of the receiving tray surface below the water receiving notch.

Further preferably, the receiving tray surface includes a circular receiving surface, an extension surface extending toward one side along the first receiving surface.

Further preferably, the receiving tray surface is provided with a first motor hole for the shaft of the motor to extend therethrough, and a first water retaining wall extends upward from an edge of the first motor hole. The center of the motor hole coincides with the center of the receiving surface.

Further preferably, the second water receiving part includes a base drainage pipe vertically installed on the base, and the water guiding lip is disposed right above the base drainage pipe in the second water receiving part.

Further preferably, on the mainframe upper cover, there is provided a second motor hole for partially inserting the clutch, and a circle of second water retaining wall is formed by extending upward from an edge of the second motor hole.

Further preferably, a lower part of the clutch is formed with at least two coaxially arranged water retaining walls, and a lower end of an outer water retaining wall is higher than a lower end of an inner water retaining wall.

Further preferably, the first water retaining wall and the second water retaining wall respectively extend into separate water retaining walls, and there is a gap between the second water retaining wall and the clutch.

Further preferably, from the outer circumference of the second motor hole, at least one circle of water retaining walls extends downward.

Further preferably, the kitchen appliance further includes: a safety link overflow structure disposed inside a safety link body (13), and the safety link body (13) is assembled inside the mainframe (14).

Further preferably, an upper trigger lever (22) and a lower trigger lever (23) are vertically formed on the upper and lower parts of the safety link body (13) respectively, and a trigger inclined surface (24) for triggering on/off of the micro switch is formed on one side of the safety link body (13).

Further preferably, the trigger inclined surface (24) and the overflow channel (20) are disposed on two opposite sides of the safety link body (13) respectively.

Further preferably, an upper surface of the mainframe (2) is recessed downward to form the mainframe upper cover (2) for the container cup assembly to be assembled thereon, an avoiding hollow cylinder (25) is provided on the mainframe upper cover (2) for the upper trigger lever (22) to pass upward therethrough, and a drainage slit (17) is disposed between the avoiding hollow cylinder (25) and the upper trigger lever (22).

Further preferably, the safety link overflow structure includes:
a water receiving groove (16) formed as a recess from an upper part of the safety link body (13), having a semi-closed bottom and disposed under a drainage slit (17), downward from the lower end of the drainage slit (17) a circle of water retaining wall (18) being formed;
a drainage hole (19) disposed at a lower part of the safety link body (13) and communicated with the water receiving groove (16) through an overflow channel (20); and
a drainage gap (21) disposed on the base (4).

Further preferably, the drainage hole (19) is provided at least one pair, the at least one pair of drainage holes (19) are oppositely disposed on two sides of a lower part of the overflow channel (20), and a lower opening end of the water receiving groove (16) correspond to the overflow channel (20) and the drainage holes (19) up and down.

Further preferably, a plane where a lower end of the water retaining wall (18) is located is flush with a plane where an upper end of the water receiving groove (16) is located, or is located below a plane where an upper end of the water receiving groove (16) is located.

Further preferably, the kitchen appliance further includes: a micro switch (30) and a micro switch bracket (26);
the safety link body (13) and the micro switch (30) are respectively disposed inside the micro switch bracket (26), a slot (27) is opened on the upper part of the micro switch bracket (26) for the safety link body (13) to inset thereinto, and a first via hole (28) is opened on the lower part of the micro switch bracket (26) for the lower trigger lever (23) to freely extend therethrough, and a compression spring assembly (29) is sleeved on the lower trigger lever (23) between the safety link body (13) and the first via hole (28).

Further preferably, the elastic piece of the micro switch (30) is arranged facing the trigger inclined surface (24).

Further preferably, a water retaining plate (31) is also provided inside the micro switch bracket (26), and formed at a lower position between the safety link body (13) and the micro switch (30).

Further preferably, each corner end of the base (4) is respectively provided with an installation position for assembling a suction disc foot assembly (10), the installation position includes: a via hole (1101) for the suction disc foot, the via hole (1101) penetrating the base (4) and allows the suction disc foot assembly (10) to suspend through it; and screw posts (1102) respectively fixed to a periphery of the via holes (1101) for the suction disc feet, and the drainage gap (21) is disposed between the suction disc foot assembly (10) and the via hole (1101) for the suction disc foot.

Further preferably, the kitchen appliance further includes: a cover opening protection structure, a container cup (15) assembled on the mainframe (14), a screw lid (32) snapped on the container cup (15), a micro switch (30) and a handle shell (36) fixedly connected to one side of the container cup (15);
wherein the cover opening protection structure includes:
a handle safety link (34), which can move up and down in the handle shell (36), includes a link body (3401), a driving inclined surface (3402) and a driving rod (3403) respectively provided on an upper part and a lower part of the link body (3401);
a hook-type buckle (35), which is fixedly connected to a lower end of the screw lid (32), and has a buckle inclined surface (3501) formed at a lower part of the hook-type buckle (35) for driving the handle safety link (34) to move up and down; and
the micro switch (30), which is assembled inside the mainframe (14), and the driving rod (3403) drives an elastic piece (3001) of the micro switch (30) to be pressed down or bounced up through the safety link body (13) in the kitchen appliance.

Further preferably, wherein the hook-type buckle (35) includes a supporting portion (3502) and a trigger portion (3503) which are connected as one body, and the buckle inclined surface (3501) is formed at a lower part of the trigger part (3503), and one side of the buckle inclined surface (3501) is recessed to form a positioning slot (3504).

Further preferably, the handle shell (36) includes a handle seat (3601), a handle cover (3602) assembled on the handle seat (3601), the handle seat (3601) is provided with a hollow working groove along a length direction of the handle seat (3601), the handle safety link (34) is disposed in the hollow working groove and can move up and down inside the hollow working groove, an upper part of the handle seat (3601) is provided with an opening (3603) for the trigger portion (3503) to enter therethrough, and a lower part of the handle seat (3601) is provided with a second via hole for the driving rod (3403) to freely extend therethrough.

Further preferably, one side of the driving inclined surface (3402) is raised with a positioning rib (3404) that matches with the positioning slot (3504).

Further preferably, at least two sliding slots (3405) are formed on the link body (3401) along a length direction of the link body (3401), and a first guiding wheel (3406) is engaged in the sliding slot (3405), the first guiding wheel (3406) is slidably connected with the sliding slot (3405), and the first guiding wheel (3406) is fixedly connected to the container cup (15) or the handle seat (3601).

Further preferably, a trigger inclined surface (24) is formed on one side of the safety link body (13) facing the micro switch (30), the upper and lower parts of the safety link body (13) are vertically connected to an upper trigger lever (22) and a lower trigger lever (23) respectively, and the upper trigger lever (22) abuts up and down against the driving rod (3403) .

Further preferably, the compression spring assembly (29) in the kitchen appliance includes an upper compression spring (2901) and a lower compression spring (2902) respectively sleeved on the driving rod (3403) and the lower trigger level (23) in the kitchen appliance, the upper compression spring (2901) is disposed between the link body (3401) and the second via hole, and the lower compression spring (2902) is disposed between the safety link body (13) and the first via hole (28) on the micro switch bracket (26).

Further preferably, the kitchen appliance includes: a container cup fixing structure assembled on the mainframe upper cover (2) of the mainframe (14), the mainframe upper cover (2) is configured to assemble a container cup assembly (37) therein, the container cup fixing structure includes locking buckle members (39) and a rotating ring (41);
a number of the locking buckle members (39) is at least three, and the locking buckle members (39) are evenly distributed on a periphery of the mainframe upper cover (2), the locking buckle member (39) includes a locking buckle bracket (3901) and a locking buckle that can be extended or retracted on the locking buckle bracket (3901);
the mainframe upper cover (2) is evenly provided with locking buckle openings (40) for the locking buckles to extend or retract therethrough;
the rotating ring (41) is rotatably assembled on a periphery of the mainframe upper cover (2), and is provided with a release lever (42) for turning the rotating ring (41) to rotate, and rotating ring bosses (43) for driving the locking buckles to retract.

Further preferably, the container cup assembly (37) includes a container cup (15), a cup holder (38), and a handle shell (36), which are integrally installed, and the cup holder (38) is evenly provided with at least three fixing holes (44) for the locking buckles to be inserted in one-to-one correspondence.

Further preferably, the mainframe upper cover (2) includes an upper cover side wall (202) in a cylindrical surface form, an upper cover bottom wall (203) closing at a lower part of the upper cover side wall (202), and a circle of upper cover outer edge (204) formed on an upper edge of the upper cover side wall (202) and extending outwards.

Further preferably, the locking buckle bracket (3901) is fixed on the mainframe (14) on the periphery of the upper cover side wall (202), and a sliding hole for sliding fit with the locking buckle is opened therethrough on the locking buckle bracket (3901).

Further preferably, the locking buckle includes:
a locking buckle sliding portion (3904), the locking buckle sliding portion (3904) being perpendicular to the locking buckle bracket (3901) and can slide freely inside the sliding hole, the line of the axis of the locking buckle sliding portion (3904) being parallel to the radial direction of the mainframe upper cover (2);
a locking buckle head (3902), the locking buckle head (3902) being installed at one end of the locking buckle sliding portion (3904) proximate to the upper cover side wall (202), the locking buckle head (3902) having a right-angle trapezoidal block structure;
a locking buckle boss (3906), the locking buckle boss (3906) being installed on the locking sliding part, and being a right-angle trapezoidal block structure;
a return spring (3907), the return spring (3907) being sleeved on the locking buckle sliding portion (3904) between the locking buckle bracket (3901) and a limit ring (3905).

Further preferably, the rotating ring (41) has a ring structure, the rotating ring (41) is provided with at least three arc-shaped sliding slots (46) at equal intervals along a circumferential direction of the rotating ring (41), the arc-shaped sliding slot (46) is engaged with a second guiding wheel (47), the second guiding wheel (47) is slidably connected to the arc-shaped sliding slot (46) and the second guiding wheel (47) is fixedly connected to the upper cover outer edge (204).

Further preferably, an arc-shaped through slot is provided extending along a circumferential direction of the upper cover outer edge (204) and penetrating the upper cover outer edge (204), a lower end of the release lever (42) is fixedly connected to the rotating ring (41) through a connecting rod (48), and the connecting rod (48) is movably inserted into the arc-shaped through slot.

Further preferably, at least three ball grooves are provided at equal intervals on the upper surface of the rotating ring (41), and a steel ball (49) is installed in the ball groove.

Further preferably, the number of the rotating ring bosses (43) is the same as the number of the locking buckle members (39), the rotating ring boss (43) is a right-angled trapezoidal block structure, and the inclined surface of the rotating ring boss (43) is opposite to the inclined surface of the locking buckle boss (3906).

Further preferably, the container cup fixing structure also includes a tension spring (50), the tension spring (50) has one end fixed on the rotating ring (41) through a self-tapping screw with a pad (51) and the other end fixed on the upper cover outer edge (204) through a self-tapping screw with a pad (51).

Further preferably, the kitchen appliance further includes: a container cup assembly, a coupler fixing structure and a coupler, and the coupler fixing structure is configured to secure the coupler on a cup bottom structure of the container cup assembly, and the coupler fixing structure includes:
a sealing structure, arranged on an end surface of the coupler which is attached to the cup bottom structure and used to close a gap between the coupler and the cup bottom structure; and
a connecting structure, the coupler and the cup bottom structure being fixedly connected through the connecting structure.

Further preferably, the container cup assembly includes the container cup, the handle shell and the cup bottom structure installed in one piece, the cup bottom structure includes the cup bottom cover and the cup holder installed in one piece, and the coupler is installed between the cup bottom cover and the cup holder.

Further preferably, the sealing structure includes at least one circle of sealing slot opened on an upper end face of the coupler and used for filling sealing element.

Further preferably, the sealing slot is in a closed shape, and the shape of the sealing slot is similar to the shape of the outer contour of the coupler.

Further preferably, when the sealing slot is provided not less than two circles, the sealing slot is proportionally reduced according to the outer contour shape of the coupler and arranged from the outside to the inside.

Further preferably, a metal ground pin and a conductive pin vertically arranged are respectively installed on the lower end surfaces of the cup bottom cover and the coupler. The coupler is also provided with a punch hole for the metal ground pin to pass through.

Further preferably, at least one circle of sealing annular slot for filling the sealing element is further formed on an upper end surface of the coupler, and the sealing annular slot surrounds a periphery of a punch hole.

Further preferably, the connecting structure includes at least two pairs of connecting hole and connecting screw hole which are respectively provided on the cup bottom cover and the coupler and correspond to each other. The connecting hole and the connecting screw hole are fixedly connected by a connecting screw.

Further preferably, the coupler fixing structure further includes a positioning structure, and the positioning structure includes at least a pair of positioning notch and positioning perimeter which are respectively arranged on the cup bottom cover and the coupler and are engaged and positioned with each other.

Further preferably, the kitchen appliance includes a screw lid sealing structure and a screw lid (64), the screw lid sealing structure is assembled on the screw lid (64), an outer periphery of a bottom surface of the screw lid (64) has an outer edge of the lid (64), the bottom surface of the screw lid (64) is further provided with a circle of annular wall (65) integrally connected with the screw lid (64), and the screw lid sealing structure includes:
a sealing ring assembly, including a sealing ring (66) sleeved on the annular wall (65), an upper bracket (67) arranged between the sealing ring (66) and the annular wall (65) for limiting everting of an upper part of the sealing ring (66), and a lower bracket (68) for compressing the sealing ring (66) and limiting displacement of the sealing ring (66), wherein an edge of the sealing ring (66) is formed with at least one layer of flange (6601) with a lower part everted, an outer edge of a free end of the flange (6601) is an R angle sealing portion (6602), and an inner edge of the free end of the flange (6601) is a parting line position (6603);
there are at least three assemblies of screw lids and screw buckles, and the assemblies are distributed at intervals on an inner side of the outer edge of the lid (64).

Further preferably, the longitudinal section of the upper bracket (67) is in a " r" shape, which includes a first annular base portion (6701) lying horizontally, and an annular rib portion (6702) formed on the outer edge of the first annular base portion (6701) and extending downwardly for wrapping the upper peripheral portion of the seal ring (66).

Further preferably, the mold release stroke of the screw buckle assembly is formed between the annular wall (65) and the outer edge of the lid (64), the width of the mold release stroke of the screw buckle assembly is at least 18 mm, and an annular buckle groove that can be fastened with the container cup (15) is formed between the annular rib portion (6702) and the outer edge of the lid (64).

Further preferably, the upper part of the sealing ring (66) is provided with a lid ring groove (69) for avoiding the first annular base portion (6701), and the upper part of the sealing ring (66) and the lid ring groove (69) are respectively raised and formed with at least one circle of annular sealing flange (70).

Further preferably, the lower bracket (68) includes an annular connecting portion (6801), a second annular base portion (6802) and a third annular base portion (6803) respectively formed at an upper end and a lower end of the annular connecting portion (6801) and extending in opposite directions to each other, wherein the second annular base portion (6802) and the third annular base portion (6803) are parallel to each other, and are used to support the sealing ring (66) and the lower end of the annular wall (65) respectively.

Further preferably, at least one circle of annular sealing step (71) is formed on the inner protrusion of the sealing ring (66).

Further preferably, a snap structure is further provided between the annular connecting portion (6801) and the annular wall (65), and the snap structure includes at least three buckle slots (72) in an annular array evenly distributed on the outer side of the annular wall (65), and at least three buckles (73) that are evenly arranged in an annular array on the inner side of the annular connecting portion (6801) and are adapted to the buckle slots (72).

Further preferably, the opening end of the container cup (15) is upwardly bent at least once to form at least one inclined surface (74), and the upper end of the container cup (15) is provided with a cup rim (77) along the horizontal direction.

Further preferably, the screw lid screw assembly includes at least one hook-type buckle (35) and at least two screw buckles (75). The outer side of the cup rim (77) is also protruded with raised structures (76) which can be screwed into the screw buckles (75) in a one-to-one correspondence.

Further preferably, a container cup shockproof structure applicable to the kitchen appliance is provided in the kitchen appliance, assembled in the mainframe upper cover (2) of the mainframe (14), the container cup shockproof structure includes at least three shockproof structures evenly distributed in the mainframe upper cover (2), and the shockproof structure includes:
a shockproof pad structure, including an arch-shaped shockproof pad body (79) and a shockproof pad support rod (80) which are formed integrally, and a limiting step (81) disposed on the shockproof pad support rod (80); and
a shockproof seat structure, integrally formed on an inner surface of the mainframe upper cover (2), and including a shockproof seat body (82) for receiving the arch-shaped shockproof pad body (79) and a limiting hole (83) for inserting the shockproof pad support rod (80).

Further preferably, the mainframe upper cover (2) is a cylindrical groove structure formed by a depression from an upper surface of the mainframe (14), the mainframe upper cover (2) includes an upper cover side wall (202) in a cylindrical surface form, an upper cover bottom wall (203) closing at a lower part of the upper cover side wall (202), and a circle of upper cover outer edge (204) formed on an upper edge of the upper cover side wall (202) and extending outwards;
the shockproof seat structures are arranged at equal intervals along an outer edge of the upper cover bottom wall (203), and the shockproof seat body (82) is recessed downward from an upper surface of the upper cover bottom wall (203), and a shape of the shockproof seat body (82) is adapted to a shape of the arch-shaped shockproof pad body (79).

Further preferably, the upper middle part of the arch-shaped shockproof pad body (79) protrudes upward to form an elastic protrusion (84), and the lower middle part of the arch-shaped shockproof pad body (79) recesses upward to form a recessed space (85). The surface of the arch-shaped shockproof pad body (79) is in an arc transition shape.

Further preferably, the longitudinal sections of the elastic protrusion (84) and the recessed space (85) are respectively trapezoidal.

Further preferably, the shockproof pad support rod (80) is arranged perpendicular to the arch-shaped shockproof pad body (79) and is fixedly connected to the middle of the lower end of the arch-shaped shockproof pad body (79).

Further preferably, the limiting step (81) is a circular truncated structure with a larger upper size and a smaller lower size and extending outward along the radial direction of the shockproof pad support rod (80), and the limiting step (81) is compressible.

Further preferably, the upper edge of the shockproof seat body (82) also extends upward to form a circle of shockproof seat premier (86).

Further preferably, the shockproof structure for the container cup also includes an upper clutch below the container cup assembly (37), and a lower clutch (87) assembled on the motor shaft of the motor (1). The upper clutch is a hexagram cylindrical structure, and the upper surface of the lower clutch (87) is recessed from the middle part to form a star-shaped cylindrical slot (88) for the upper clutch to be matched and inserted therein. A hollow washer (89) matched in shape is clamped between the upper clutch and the star-shaped cylindrical slot (88).

The advantages and positive effects of the present disclosure are as follows.
1. In the present disclosure, the overflow structure includes a mainframe-upper-cover drainage structure and an interference drainage structure. The two drainage means can both function to effectively prevent the mainframe from flooding in a large area, prevent the motor from soaking in water, and improve safety in use.
2. In the present disclosure, the water above the mainframe upper cover can be quickly drained through the side drainage hole and the first water receiving part in order to prevent the mainframe from being flooded in a large area.
3. In the present disclosure, by providing a water receiving tray between the mainframe upper cover and the motor, water overflown from the gap between the clutch and the mainframe upper cover can be introduced to an area outside the motor through the water receiving tray and the second water receiving part, to prevent the motor from soaking in water.
4. In the present disclosure, there is a drainage gap between the suction disc foot assembly and the via hole for the suction disc foot, so that the water on the base can be drained through the drainage gap, avoiding the problem that the liquid in the base 1 cannot be drained, and preventing water from entering the motor. A variety of drainage means are adopted to improve safety.
5. In the present disclosure, the safety link body is also provided with a safety link overflow structure. Water can penetrate from the drainage gap and is guided into the water receiving groove through the water retaining wall at the lower end of the drainage gap. The water collected by the water receiving groove can flow out through the overflow channel and the drainage hole and fall into a drainage gap between the base and the suction cup foot assembly and flow out of the mainframe, preventing the problem that liquid in the safety link body and the base cannot be discharged, preventing water from entering the micro switch. A step-by-step drainage. method is adopted, the structure is simple, the drainage is efficient and practical, and the safety is improved.
6. In the present disclosure, the trigger inclined surface and the overflow channel are disposed on two opposite sides of the safety link body respectively, to prevent water from entering the micro switch to cause short circuit, which can improve safety.
7. In the present disclosure, the suction cup foot assembly is suspended through the via hole for the suction cup foot. When the cooking machine is stirred at a high speed, the weighing foot via hole shakes around the suction cup foot assembly without touching the suction cup foot assembly, which can buffer part of the vibration, reduce the vibration and displacement of the cooking machine.
8. In the present disclosure, the suction cup foot assembly is suspended through the via hole for the suction cup foot. Even if the cooking machine is fully loaded with food in a place where the table top is inclined, the suction cup foot assembly cannot touch the via hole for the suction cup foot, which ensures the accuracy of weighing.
9. In the present disclosure, the cover opening protection structure includes a hook-type buckle, a handle safety link, a safety link body and a micro switch arranged from top to bottom in space, which constitute a linkage system. The structure is simple, reliable, practical.
10. In the present disclosure, the rotation of the screw lid controls the handle safety link and moves the safety link body up and down to trigger the closing and opening of the elastic piece of the micro switch, in order to control the start and stop of other electrical components. The structure is simple, reliable, practical, safe, stable, highly controllable and low in cost, and is suitable for market promotion in the field of kitchen appliances.
11. In the present disclosure, in the process the buckle inclined surface rotates with the screw lid clockwise, the buckle inclined surface squeezes the driving inclined surface so that the handle safety link is pressed down as a whole. The structure is simple, and is easy for production.
12. In the present disclosure, one side of the driving inclined surface is raised with a positioning rib that matches with the positioning slot, the positioning rib and the positioning slot are restricted to each other, which has a positioning function, and the screw lid will not easily loosen when the screw lid is screwed tight.
13. In the present disclosure, when the link body moves up and down, the sliding slot can move up and down on the first guiding wheel to have a guiding function and prevent the link body from displacing during the movement.
14. In the present disclosure, when the buckle inclined surface is far away from the driving inclined surface, the reset assembly can drive the handle safety link and the mainframe safety link to reset, and then realize the reset of the elastic piece of the micro switch, to prepare for the next operation and facilitate the repeated use of the cover opening protection structure.
15. In the present disclosure, the on/off of the motor in the mainframe can be controlled by the on/off of the micro switch, which can meet the safety requirements and greatly reduce the probability of mechanical hazards.
16. In the present disclosure, by arranging at least three locking buckle members evenly distributed on the periphery of the mainframe upper cover, the mainframe can hold the container cup assembly securely. With the present disclosure, the container cup assembly can be locked in all directions without concerning the problem that the container cup assembly would come out or shake, which can greatly improve the user experience.
17. In the present disclosure, during assembling the container cup assembly, the handle shell is aligned with the avoiding slot and inserted therein. It can have a positioning function, so that the container cup assembly can only be inserted into the mainframe upper cover in one direction.
18. In the present disclosure, the locking buckle includes a locking buckle sliding portion, a locking buckle head, a locking buckle boss and a return spring, which can easily implement the locking/unlocking of the container cup assembly, which greatly improves the user experience.
19. In the present disclosure, the container cup assembly can be easily unlocked by turning the release lever. The cooperation of the arc-shaped sliding slot, the guiding wheel and the steel ball can make the rotating ring rotate smoothly and stably, and the operation is convenient.
20. In the present disclosure, the tension spring pulls the rotating ring tight in a counter direction, preventing the rotating ring from affecting the return spring to push the locking buckle outward, thus allowing the container cup fixing structure suitable for repeated operations.
21. In the present disclosure, the sealing structure in the coupler fixing structure can close a gap between the coupler and the cup bottom structure, effectively avoiding the user's misoperation causing liquid in the cup bottom cover to enter the interior and cause short-circuit damage to electrical components; the connecting structure in the coupler fixing structure can fixedly connect the coupler and the cup bottom structure, the structure is simple and easy to install and disassemble.
22. In the present disclosure, the coupler and the cup bottom structure are connected by the coupler fixing structure, the container cup assembly can be soaked in water as a whole or put into the dishwasher as a whole, so that it is easier to clean the food residues in dead corners of the container cup and improve the user experience.
23. In the present disclosure, the at least one circle of sealing slot can have a sealing effect between the outer edge of the coupler and the cup bottom cover. The sealing annular slot can have a sealing effect between the periphery of the punch hole and the cup bottom cover. It can effectively avoid the user's misoperation that might cause liquid to enter the bottom cover and cause short circuit damage to the electrical components.
24. In the present disclosure, the positioning structure in the coupler fixing structure has a positioning and assembling effect, to prevent the coupler from being displaced on the cup bottom cover.
25. In the present disclosure, the upper bracket can limit everting of the upper part of the sealing ring, the lower bracket can compress the sealing ring and limit displacement of the sealing ring, , which is convenient to assemble and disassemble. The removable upper bracket not only can ensure a sufficient length of the release stroke for the screw buckle assembly, allow the screw buckle assembly of the screw lid to be released from the mold, but also can withstand the sealing ring to prevent everting. The structure is simple and has strong practicability.
26. In the present disclosure, the R angle sealing portion is arranged on the outer edge of the free end of the outer flange, and is in close contact with the sealing surface of the container cup, which greatly improves the sealing effect. In addition, the everting flange of the sealing ring fits to the container cup tighter when subject to impulsive force and pressure of stirring liquid, having a further sealing effect.
27. In the present disclosure, the parting line position is arranged on the inner edge of the free end of the flange. Even if there is a glitch at this position, since it does not contact the sealing surface of the container cup, there is no need to worry about the sealing problem.
28. In the present disclosure, the annular sealing flange and the annular sealing step can have a sealing effect, to prevent debris from entering the gap between the sealing ring and the upper bracket, the screw lid and the annular wall, and also facilitates subsequent cleaning.
29. In the present disclosure, the lower bracket 68 and the annular wall 65 connected by the snap structure have a simple, practical and aesthetic structure, improve the assembly efficiency and assembly effect between the lower bracket 68 and the annular wall 65, and are easy to assemble, which is convenient for users to disassemble and install by themselves and thoroughly clean all parts.
30. In the present disclosure, the inclined surface is arranged so that the contact area and the amount of interference between the sealing ring and the annular inclined surface of the container cup are very small, which can reduce the interference stroke between the sealing ring and the container cup when installing. The friction between the sealing ring and the container cup is very small, which is conducive to the easy tightening of the screw lid.
31. In the present disclosure, the screw lid sealing structure further includes a screw lid and screw buckle assembly, through which the screw lid can be locked or unlocked to the container cup, and the operation is convenient and the practicability is high.
32. In the present disclosure, the screw lid screw assembly includes at least one hook-type buckle and at least two screw buckles. When the screw lid is installed on the container cup, the raised structures are screwed into the screw buckles on the screw lid, and the hook-type buckle partially enters the opening of the handle shell, to realize double locking.
33. In the present disclosure, the shockproof seat structure can limit the displacement of the shockproof pad structure in the vertical and horizontal direction, which can improve the assembly stability of the shockproof pad structure.
34. In the present disclosure, a plurality of arch-shaped shockproof pad bodies made of soft rubber are provided between the mainframe cover and the container cup assembly, to avoid direct contact between hard rubbers, having a cushioning and shock-absorbing effect. The noise and vibration of the whole machine can be greatly reduced, providing a better user experience.
35. In the present disclosure, the arch-shaped shockproof pad body is designed in an arch shape, it can bear weight and undergo certain elastic deformation, and can effectively reduce vibration. The elastic protrusion can be both pressed and rebounded, the recessed space not only can provide more deformation space for the elastic protrusion, but also can help the subsequent reset and rebound of the elastic protrusion, which can greatly improve the effect of buffering and shock absorption.
36. In the present disclosure, the shockproof structure for the container cup also includes an upper clutch of a hexagram cylindrical structure, a star-shaped cylindrical slot, a hollow washer, so that the power transmission connection between the upper and lower clutches has a soft rubber buffer, which can cooperate with the shockproof pad structure and the shockproof seat structure, and can further greatly reduce the noise and vibration of the whole machine during high-speed stirring, and provide a better user experience.
37. In the present disclosure, the star-shaped cylindrical slot is arranged in hexagram cylindrical structure. When being injection molded, the lower clutch can be designed with three equally spaced glue feeding points for injection molding, so that the size is stable and the concentricity is high during injection molding, which can further effectively reduce the vibration and noise generated by the blade holder.

### BRIEF DESCRIPTION OF THE DRAWINGS

The technical solutions of the present disclosure will be further described in detail below with reference to the drawings and embodiments. However, it should be understood that these drawings are only designed for explanatory purposes, and therefore are not intended to limit the scope of the present disclosure. In addition, unless otherwise specified, these drawings are only intended to conceptually illustrate the structure described herein, and are not necessarily drawn to scale.
Fig. 1 is a schematic cross-sectional view of a mainframe according to the present disclosure;
Fig. 2 is a schematic enlarged view of part A in Fig. 1;
Fig. 3 is a schematic exploded view of Fig. 1;
Fig. 4 is a schematic structural diagram of a water receiving tray;
Fig. 5 is a schematic cross-sectional view of a kitchen appliance;
Fig. 6 is a schematic enlarged view of part B in Fig. 5;
Fig. 7 is a schematic structural diagram of a base;
Fig. 8 is a schematic exploded view of the present disclosure;
Fig. 9 is a schematic enlarged view of part A in Fig. 8;
Fig. 10 is a schematic cross-sectional view of the present disclosure;
Fig. 11 is a schematic enlarged view of part B in Fig. 10;
Fig. 12 is a schematic stereoscopic view of a safety link body;
Fig. 13 is a schematic cross-sectional view of the safety link body;
FIG. 14 is a schematic stereoscopic view of the safety link body from another view angle;
Fig. 15 is a schematic cross-sectional view of the present disclosure;
Fig. 16 is a schematic structural diagram of the base;
Fig. 17 is a schematic exploded view of the kitchen appliance;
Fig. 18 is a schematic exploded view of a cover opening protection structure;
Fig. 19 is a schematic structural diagram of a handle safety link;
Fig. 20 is a front cross-sectional view of the kitchen appliance;
Fig. 21 is a side cross-sectional view of the kitchen appliance;
Fig. 22 is a schematic enlarged view of part A in Fig. 21;
Fig. 23 is a schematic stereoscopic view of a screw lid;
Fig. 24 is a control circuit diagram of a motor;
Fig. 25 is a schematic cross-sectional view of a stir-frying machine;
Fig. 26 is a schematic exploded view of the stir-frying machine;
Fig. 27 is a schematic structural diagram of a mainframe upper cover;
Fig. 28 is a schematic structural diagram of Fig. 27 from another view angle;
Fig. 29 is a schematic structural diagram of a locking buckle member and a rotating ring in an assembled state;
Fig. 30 is a schematic enlarged view of part A in Fig. 29;
Fig. 31 is a schematic structural diagram of Fig. 29 from another view angle;
FIG. 32 is a schematic cross-sectional view of the mainframe upper cover;
Fig. 33 is a schematic exploded view of a container cup assembly;
Fig. 34 is a schematic structural diagram of the container cup assembly in a state that a coupler and a cup bottom cover are assembled;
Fig. 35 is a schematic structural diagram of a state that the coupler and the cup bottom cover are assembled;
Fig. 36 is a schematic structural diagram of the coupler;
Fig. 37 is a schematic structural diagram of the cup bottom cover;
Fig. 38 is a schematic structural diagram of a screw lid in the prior art;
Fig. 39 is a schematic structural diagram of a state that the screw lid and the container cup are assembled;
Fig. 40 is a schematic enlarged view of part A in Fig. 39;
Fig. 41 is a schematic exploded view of the screw lid;
Fig. 42 is a schematic cross-sectional view of a sealing ring;
Fig. 43 is a schematic stereoscopic view of the screw lid;
Fig. 44 is a schematic top view of Fig. 43;
Fig. 45 is a schematic top view of the container cup;
Fig. 46 is a schematic half sectional view of the structure of the present disclosure;
Fig. 47 is a schematic enlarged view of part A in Fig. 46;
Fig. 48 is a schematic stereoscopic view of the mainframe;
Fig. 49 is a schematic enlarged view of part B in Fig. 48;
Fig. 50 is a schematic front view of a shockproof pad structure;
Fig. 51 is a schematic exploded view of a hollow washer and a lower clutch.
In the drawings: 1. motor, 2. mainframe upper cover, 201. second water retaining wall, 3. clutch, 301. water retaining wall, 4. base, 5. side drainage hole, 6. water receiving tray, 601. receiving tray surface, 602. tray wall, 603. water receiving notch, 604. water guiding lip, 605. first water retaining wall, 7. base drainage pipe, 8. water receiving pipe, 9. transfer structure, 10. suction disc foot assembly (or weighing foot assembly),11. installation position, 1101. via hole for the suction disc foot (or via hole for the weighing foot), 1102. screw post, 12. self-tapping screw, 13. safety link body, 14. mainframe, 16. water receiving groove, 17. drainage slit, 18. water retaining wall, 19. drainage hole, 20. overflow channel, 21. drainage gap, 22. upper trigger lever, 23. lower trigger lever, 24. trigger inclined surface, 25. avoiding hollow cylinder, 26. micro switch bracket, 27. slot, 28. first via hole, 29. compression spring assembly (or reset assembly), 30. micro switch, 31. water retaining plate, 15. container cup, 32. screw lid (or container cap), 33. screw handle, 34. handle safety link, 3401. link body, 3402. driving inclined surface, 3403. driving rod, 3404. positioning rib, 3405. sliding slot, 3406. first guiding wheel, 35. hook-type buckle, 3501. buckle inclined surface, 3502. support portion, 3503. trigger portion, 3504. positioning slot, 3001. elastic piece, 36. handle shell (or handle), 3601. handle seat, 3602. handle cover, 3603. opening, 2901. upper compression spring, 2902. lower compression spring, 37. container cup assembly (or cup assembly), 38. cup holder, 202. upper cover side wall, 203. upper cover bottom wall, 204. upper cover outer edge, 39. locking buckle member, 3901. locking buckle bracket, 3902. locking buckle head, 3903. limit block, 3904. locking buckle sliding portion, 3905. limit ring, 3906.1ockingbuckle boss, 3907. return spring, 40. locking buckle opening, 41. rotating ring, 42. release lever, 43. rotating ring boss, 44. fixing hole, 45. avoiding slot, 46. arc-shaped sliding slot, 47. second guiding wheel, 48. connecting rod, 49. steel ball, 50. tension spring, 51. self-tapping screw with a pad, 52. coupler, 53. cup bottom cover, 54. sealing slot, 55. metal ground pin, 56. conductive pin, 57. punch hole, 58. sealing annular slot, 59. connecting hole, 60. connecting screw hole, 61. connecting screw, 62. positioning notch, 63. positioning perimeter, 64. outer edge of the lid, 65. annular wall, 66. sealing ring, 6601. flange, 6602. R angle sealing portion, 6603. parting line position, 67. upper bracket, 6701. first annular base portion, 6702. annular rib portion, 68. lower bracket, 6801. annular connecting portion, 6802. second annular base, 6803. third annular base, 69. annular groove, 70. annular sealing flange, 71. annular sealing step,72. buckle slot, 73. buckle, 74. inclined surface, 75. screw buckle, 76. protrusion structure, 77.cup rim, 78. rib, 79. arch-shaped shockproof pad body, 80. shockproof pad support rod, 81. limiting step, 82. shockproof seat body, 83. limiting hole, 84. elastic protrusion, 85. recessed space, 86. shockproof seat premier, 87. lower clutch, 88. Star-shaped cylindrical slot, 89. hollow washer.

### DETAILED DESCRIPTION

First, it should be noted that the specific structure, features, and advantages of the present disclosure will be described in detail below by way of examples. However, all the descriptions are only for illustration and should not be construed as limiting the present disclosure. In addition, any single technical feature described or implied in each embodiment mentioned herein, or any single technical feature displayed or implied in each drawing, can still be combined or deleted among these technical features (or their equivalents), in order to obtain more other embodiments of the present disclosure that may not be directly mentioned in this document. In addition, for the sake of brevity of the drawings, the same or similar technical features may only be labeled in one place in the same drawing.

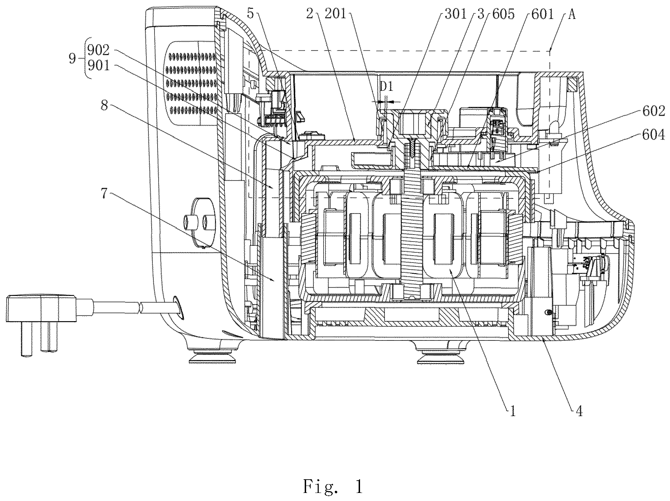

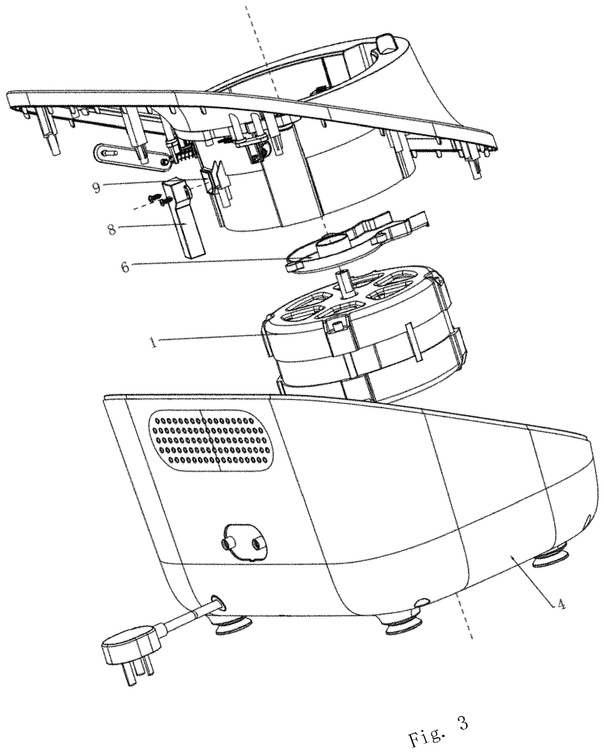

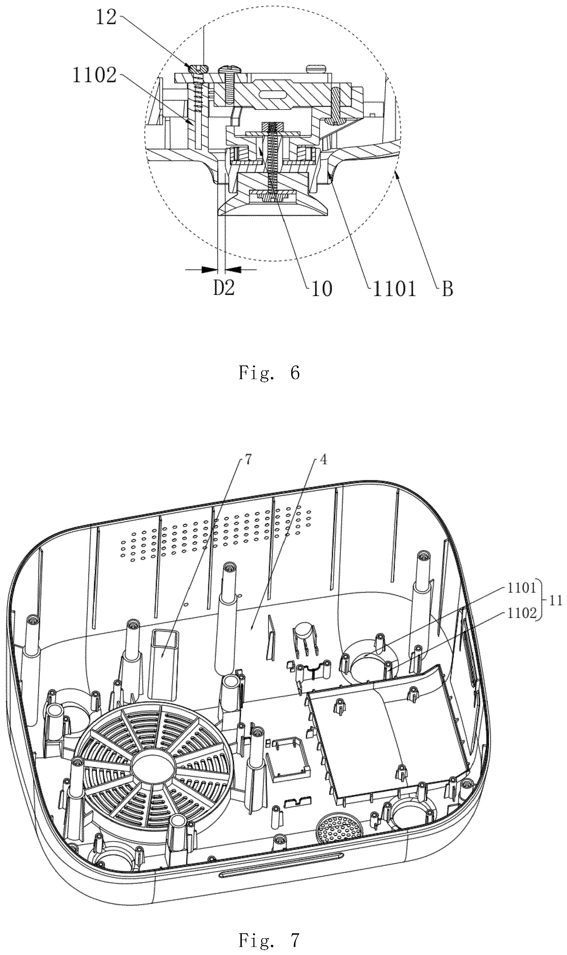

In the present disclosure, unless otherwise clearly defined and limited, the terms "installation", "setting", "connecting", "fixing", "spinning" and other terms should be understood in a broad sense. For example, it can be a fixed connection or a detachably connection or an integrated connection; it can be mechanically connected or electrically connected; it can be directly connected or indirectly connected through an intermediary, and it can be the internal communication of two components or interaction between two components. Unless specifically defined otherwise, those of ordinary skill in the art can understand the specific meanings of the above terms in the present disclosure according to specific circumstances. Hereinafter, the present disclosure will be described in detail with reference to Figs. 1 to 7.

### Example 1

As shown in Figs. 1 to 4, a kitchen appliance includes an overflow structure disposed in a mainframe of the kitchen appliance in which a motor 1 is assembled. A mainframe upper cover 2 is disposed above the motor 1, and the mainframe upper cover 2 is connected to the mainframe as a whole piece and is used to place a container cup assembly. The shaft of the motor 1 is connected to a clutch assembly 3 for power transmission. A base 4 is installed at the lower end of the mainframe. The overflow structure includes: a mainframe-upper-cover drainage structure including at least one side drainage hole 5 opened at the edge of the mainframe upper cover 2, and a first water receiving part for transferring liquid in the side drainage hole 5; an interference drainage structure including a water receiving tray 6 for receiving liquid overflowing from the gap between the clutch assembly 3 and the mainframe upper cover 2, and a second water receiving component for transferring liquid in the water receiving tray 6.

Structure and Operation. In this technical solution, when a user accidentally pours water into the mainframe upper cover or forgets to install the blade holder into the container cup assembly before pouring water therein, it tends to cause a large area of the mainframe housing to soak in water, and the accumulated water will pass through the gap between the clutch assembly 3 and the mainframe upper cover 2, entering the motor 1 and causing the motor 1 to fail or other safety problems. In this example, an overflow structure is disposed inside the mainframe. The overflow structure includes a mainframe-upper-cover drainage structure and an interference drainage structure. The two drainage means can both function to effectively prevent the mainframe from flooding in a large area. Wherein the mainframe-upper-cover drainage structure includes at least one side drainage hole 5 opened at the edge of the mainframe upper cover 2, and a first water receiving part for transferring liquid in the side drainage hole 5, so that the water above the mainframe upper cover 2 can be quickly drained through the side drainage hole 5 and the first water receiving part in order to prevent the mainframe from being flooded in a large area. The interference drainage structure includes a water receiving tray 6 for receiving liquid overflow from the gap between the clutch assembly 3 and the mainframe upper cover 2 and a second water receiving part used to transfer the liquid in the water receiving tray 6. When the water accumulates above the mainframe upper cover 2, the water inevitably overflows from the gap between the clutch assembly 3 and the mainframe upper cover 2 to the motor 1. It tends to cause water to enter the motor 1. By providing a water receiving tray 6 between the mainframe upper cover 2 and the motor 1, water can be introduced to an area outside the motor through the second water receiving part to prevent the motor 1 from soaking in water.

Furthermore, in this example, it can also be contemplated that the first water receiving part includes a base drainage pipe 7 vertically installed on the base 4, and a water receiving pipe 8 inserted into the upper end of the base drainage pipe 7. The lower end of the side drainage hole 5 is tightly connected with the opening end of the water receiving pipe 8 through a transfer structure 9. The base drainage pipe 7 penetrates the base 4. The water discharged through the side drainage hole 5 is discharged from the base through the transfer structure 9, the water receiving pipe 8, and the base drainage pipe 7 in sequence, so that the water above the mainframe upper cover 2 can be quickly drained, to prevent the mainframe from flooding in a large area.

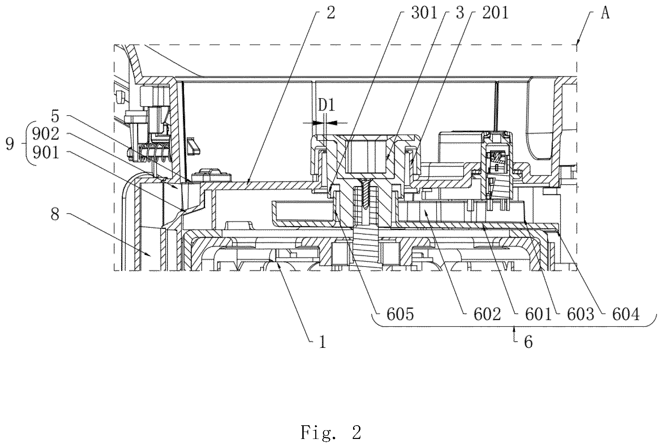

Furthermore, in this example, it can also be contemplated that, as shown in Figs. 2-3, the transfer structure 9 may include an inclined transfer bottom surface 901 formed by bending at least once along one side edge of the side drainage hole 5, and a connecting surface 902 connected between the transfer bottom surface 901 and other edge of the drainage hole 5. The opening end of the transfer structure 9 faces the water receiving pipe 8. The transfer bottom surface 901 is inclined, so that the water above the mainframe upper cover 2 can quickly flow into the water receiving pipe 8. The opening end of the water receiving pipe 8 faces the transfer structure 9 and closely connected to the opening end of the transfer structure 9, in order to prevent leakage of water flowing from the transfer structure 9.

Furthermore, in this example, it can also be contemplated that the water receiving tray 6 includes a receiving tray surface 601 and a tray wall 602 extending upward along the edge of the receiving tray surface 601. One side of the tray wall 602 is formed with a water receiving notch 603, and a water guiding lip 604 extends downward from the edge of the receiving tray surface 601 below the water receiving notch 603. The liquid overflowing from the gap between the clutch assembly 3 and the mainframe upper cover 2 falls onto the receiving tray surface 601 under the action of gravity, flows down to the second water receiving part through the water receiving notch 603, and is drained through the second water receiving part, in order to prevent water from entering the motor, wherein the edge of the receiving tray surface 601 under the water receiving notch 603 extends downward with the water guiding lip 604 which functions to guide water flow.

Furthermore, in this example, it can also be contemplated that the receiving tray surface 601 includes a circular receiving surface, an extension surface extending toward one side along the receiving surface. The water receiving notch 603 is disposed at one side of the extension surface away from the receiving surface.

Furthermore, in this example, it can also be contemplated that the receiving tray surface 601 is provided with a first motor hole for the motor shaft to extend therethrough, and a first water retaining wall 605 extends upward from the edge of the first motor hole. The center of the motor hole coincides with the center of the receiving surface. The first water retaining wall 605 can prevent the water on the receiving tray surface 601 from flowing to the motor 1 through the first motor hole.

Furthermore, in this example, it can also be contemplated that the second water receiving part includes a base drainage pipe 7 vertically installed on the base 4, and the water guiding lip 604 is disposed right above the base drainage pipe 7 in the second water receiving part.

Furthermore, in this example, it can also be contemplated that on the mainframe upper cover 2, there is provided a second motor hole for partially inserting the clutch assembly 3, and a circle of second water retaining wall 201 is formed by extending upward from the edge of the second motor hole. The second water retaining wall 201 can prevent water on the mainframe upper cover 2 from flowing down through the second motor hole.

Furthermore, in this example, it can also be contemplated that the lower part of the clutch assembly 3 is formed with at least two coaxially arranged water retaining walls 301, and the lower end of the outer water retaining wall 301 is higher than the lower end of the inner water retaining wall 301.

Furthermore, in this example, it can also be contemplated that, as shown in Figs. 1-2, the first water retaining wall and the second water retaining wall 201 respectively extend into separate water retaining walls 301, which can elongate the route passing by the liquid flowing down from the gap between the clutch assembly 3 and the mainframe upper cover 2 as possible as it could be, reduce the amount of overflowing water as possible as it could be, and lower the burden of the water receiving tray 6. A gap D1 is provided between the second water retaining wall 201 and the clutch assembly 3, which can prevent overflow without hindering the rotation of the clutch assembly 3 above the second water retaining wall 201.

Furthermore, in this example, it can also be contemplated that, also, from the outer circumference of the second motor hole, at least one circle of water retaining walls 301 extends downward.

### Example 2

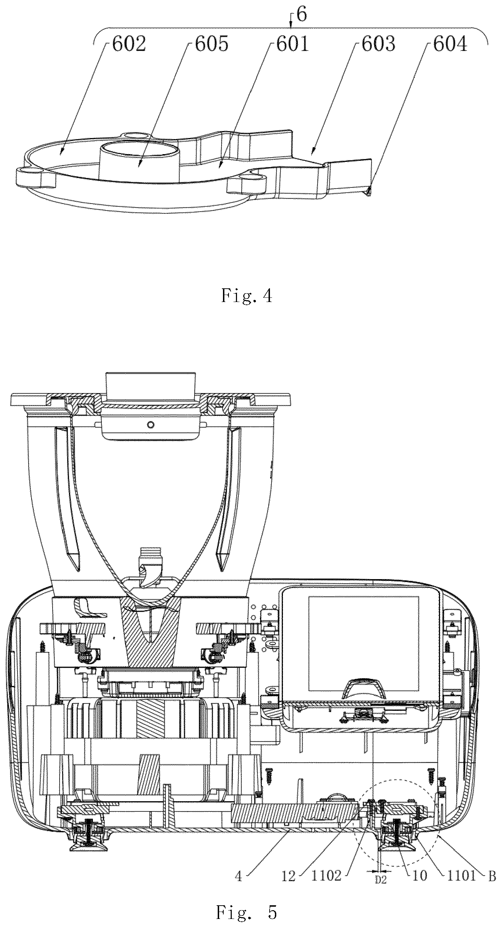

As shown in Figs. 5-7, Example 2 of the present disclosure is further improved on basis of the Example 1, in order to fully exhibit the technical advantages of the present disclosure, which will be exemplified below.

For example, each corner end of the base 1 is provided with an installation position 11 for assembling a suction disc foot assembly 10. The installation position 11 includes a via hole 1101 for the suction disc foot and screw posts 1102 respectively fixed to the periphery of the via hole 1101 for the suction disc foot, the via hole 1101 penetrating the base 4 and for the suction disc foot assembly 10 to pass through. The upper end of the suction disc foot assembly 10 and the screw posts 1102 are connected by a self-tapping screw 12. When the mainframe is placed on the top of a table, the air under the suction disc foot assembly 10 is pressed out, causing the air pressure inside the suction disc foot to be lower than the air pressure outside the suction disc foot, and the suction disc foot is less likely to be pulled up, which reduces the vibration and displacement of the machine, and improve the stability of the machine. There is a drainage gap D2 between the suction disc foot assembly 10 and the via hole 1101 for the suction disc foot. The suction disc foot assembly 10 plays the role of supporting and shock absorption. There is a drainage gap between the suction disc foot assembly 10 and the via hole 1101 for the suction disc foot, so that the water on the base can be drained through the drainage gap, avoiding the problem that the liquid in the base 1 cannot be drained, and preventing water from entering the motor. A variety of drainage means are adopted to improve safety.

In sum, the present disclosure provides an overflow structure applied to a kitchen appliance, which adopts a variety of drainage means to improve safety in use.

### Example 3

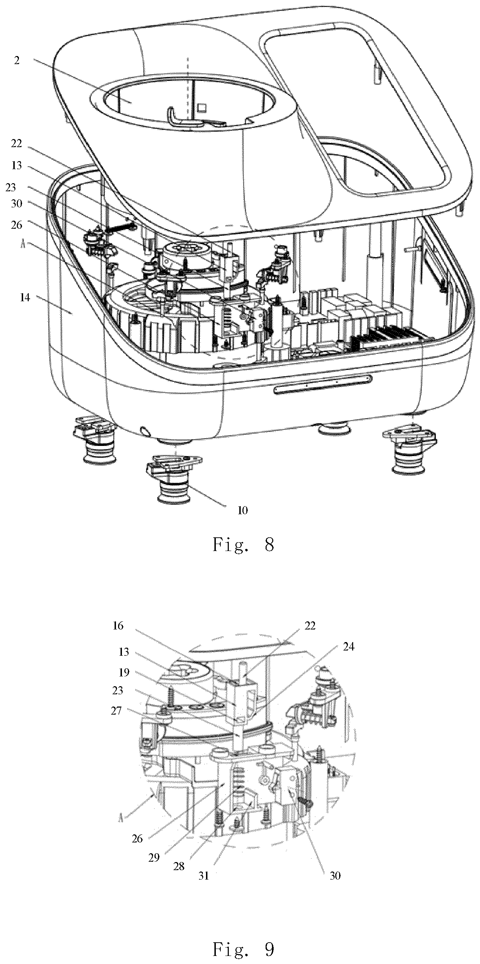

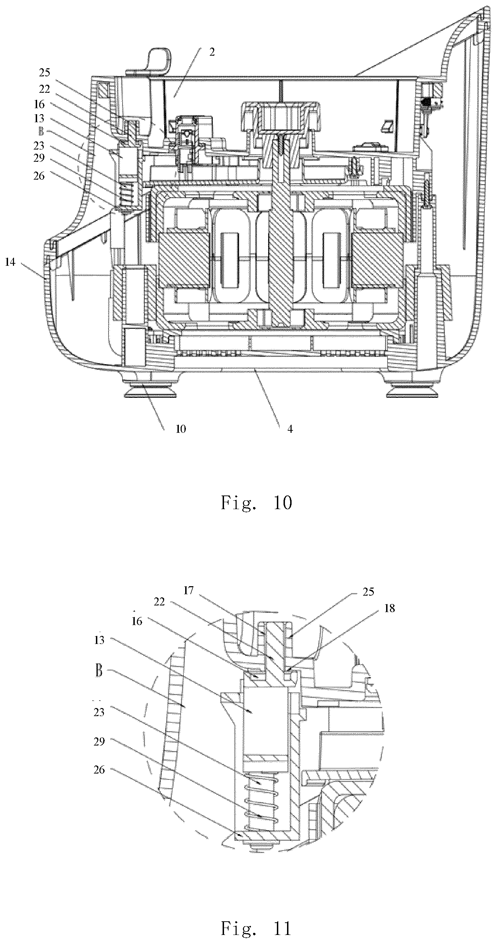

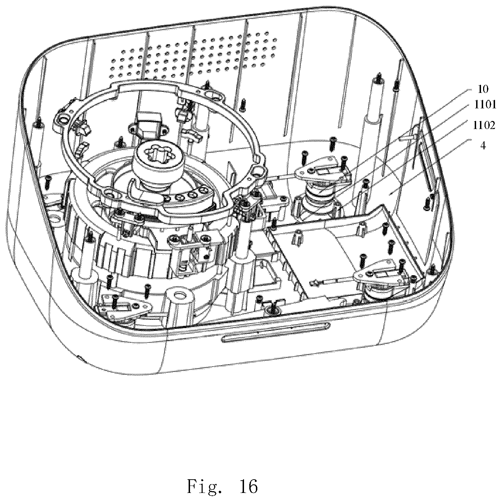

The technical solution provided by the example of the present disclosure relates to a safety link overflow structure applicable to a kitchen appliance and utensils, which pertains to the field of kitchen appliances. Taking a stir-frying machine as an example, as shown in Figs. 8-16, a kitchen appliance or utensil includes a safety link overflow structure. The safety link overflow structure is disposed inside a safety link body 13. The safety link body 13 is assembled inside the mainframe 14. The lower end of the mainframe 14 is provided with a base 4. The safety link overflow structure includes: a water receiving groove 16 formed as a recess from the upper part of the safety link body 13, having a semi-closed bottom and disposed under a drainage slit 17, downward from the lower end of the drainage slit 17 formed a circle of water retaining wall 18; a drainage hole 19 disposed at the lower part of the safety link body 13 and communicated with the water receiving groove 16 through an overflow channel 20; and a drainage gap 21 disposed on the base 4.

Structure and Operation. In this technical solution, the safety link body 13 is used as a safety interlocked structure. When the container cup assembly is properly assembled on the mainframe upper cover 2, a driving rod on the container cup assembly presses down the safety link body 13, and then presses an elastic piece of a micro switch down to the lower limit to trigger the micro switch to form a closed circuit. When the elastic piece of the micro switch is pressed down to trigger close the circuit, a signal current that controls other electrical components is then turned on, and the electrical components start to work; otherwise, when the container cup assembly is removed, the safety link body 13 is reset, the elastic safety link body 13 of the micro switch returns to a free state, and the micro switch opens the closed circuit. At that time, the signal current that controls the activation of other electrical components is turned off, and the electrical components stop working. The structure is simple, reliable and practical, safe, stable and highly controllable. The safety link body 13 is also provided with a safety link overflow structure. The safety link overflow structure includes a water receiving groove 16, a drainage hole 19, an overflow channel 20, and a drainage gap 21. Water can penetrate from the drainage gap 17 and is guided into the water receiving groove 16 through the water retaining wall 18 at the lower end of the drainage gap 17. The bottom of the water receiving groove 16 is semi-closed, and the water collected by the water receiving groove 16 can flow out through the overflow channel 20 and the drainage hole 19 and fall into a drainage gap 21 between the base 4 and the suction cup foot assembly 10 and flow out of the mainframe. Then, all the water overflowing from the drainage gap 17 can be discharged out of the mainframe, preventing the problem that liquid in the safety link body 13 and the base 4 cannot be discharged, preventing water from entering the micro switch. A step-by-step drainage. method is adopted, the structure is simple, the drainage is efficient and practical, and the safety is improved.

Furthermore, in this example, it can also be contemplated that an upper trigger lever 22 and a lower trigger lever 23 are vertically formed on the upper and lower parts of the safety link body 13 respectively. A trigger inclined surface 24 for triggering on/off of the micro switch is formed on one side of the safety link body 13. By depressing the upper trigger lever 22, the safety link body 13 can be driven downward, and the trigger inclined surface 24 then presses down the elastic piece of the micro switch, so that the trigger micro switch forms a closed circuit.

Furthermore, in this example, it can also be contemplated that the trigger inclined surface 24 and the overflow channel 20 are disposed on two opposite sides of the safety link body 13 respectively. The overflow channel and the micro switch are separated by the trigger inclined surface to prevent water from entering the micro switch.

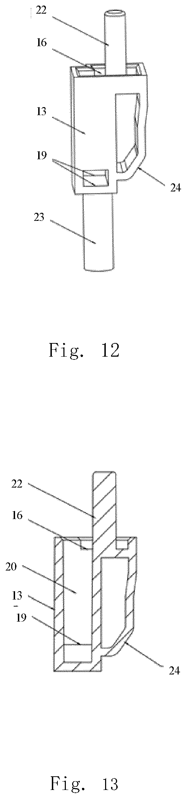

Furthermore, in this example, it can also be contemplated that the drainage hole 19 is provided at least one pair of them, which are disposed on two opposite sides of the lower part of the overflow channel 20. The lower opening end of the water receiving groove 16 correspond to the overflow channel 20 and the drainage holes 19 up and down, and the plane where the drainage hole 19 is located is perpendicular to the plane where the trigger inclined surface 24 is located. As shown in Fig. 13, the overflow channel 20 and the trigger inclined surface 24 I are disposed on the left and right sides of the safety link body 13 respectively, and the two drainage holes 19 are disposed on the front and back sides of the safety link body 13 respectively, so that the discharging action and the triggering action can be separated, in order to prevent water from entering the micro switch.

Furthermore, in this example, it can also be contemplated that the upper surface of the mainframe 14 is recessed downward to form the mainframe upper cover 2 for the container cup assembly to be assembled thereon. An avoiding hollow cylinder 25 is provided on the mainframe upper cover 2 for the upper trigger lever 22 to pass upward therethrough. The drainage slit 17 is disposed between the avoiding hollow cylinder 25 and the upper trigger lever 22. The upper trigger lever 22 extends upward passing through the avoiding hollow cylinder 25. When the container cup assembly is properly assembled on the mainframe upper cover 2, the driving rod on the container cup assembly presses down the upper trigger lever 22, and then triggers the micro switch to close the circuit. If there is water on the mainframe upper cover, the water can flow from the drainage slit 17 to the water receiving groove 16. The bottom of the water receiving groove 16 is semi-closed, and the water collected by the water receiving groove 16 can flow through the overflow channel 20 and the drainage hole 19 and fall into the drainage gap 21 between the base 4 and the suction cup foot assembly 10, and flow out of the mainframe.

Furthermore, in this example, it can also be contemplated that the plane where the lower end of the water retaining wall 18 is located is flush with the plane where the upper end of the water receiving groove 16 is located, or is located below the plane where the upper end of the water receiving groove 16 is located. The water retaining wall 18 plays a guiding role, which helps to guide all the water in the drainage slit 17 into the water receiving groove 16 and prevents water from entering other electrical components.

Furthermore, in this example, it can also be contemplated that the safety link body 13 and the micro switch 30 are respectively disposed inside a micro switch bracket 26. A slot 27 is opened on the upper part of the micro switch bracket 26 for the safety link body 13 to inset thereinto, and a first via hole 28 is opened on the lower part of the micro switch bracket 26 for the lower trigger lever 23 to freely extend therethrough. A compression spring assembly 29 is sleeved on the lower trigger lever 23 between the safety link body 13 and the first via hole 28. When the container cup assembly is removed, under the action of the elastic force of the compression spring assembly 29, the safety link body 13 is reset, and the elastic piece of the micro switch returns to a free state.

Furthermore, in this example, it can also be contemplated that the micro switch 30 is fixed in the micro switch bracket 26, and the elastic piece of the micro switch 30 is arranged facing the trigger inclined surface 24 of the safety link 1 of the mainframe.

Furthermore, in this example, it can also be contemplated that a water retaining plate 31 is also provided inside the micro switch bracket 26, and formed at a lower position between the safety link body 13 and the micro switch 30. The water discharged from the drain hole 19 continues to flow down through the first via hole 28 and the front and rear of the micro switch bracket 26 until it flows out of the mainframe through the drain gap 21. The water blocking plate 31 can block the water from flowing in the direction of the micro switch and the motor.

Furthermore, in this example, it can also be contemplated that each corner end of the base 4 is provided with an installation position for assembling the suction disc foot assembly 10. The installation position includes: a via hole 1101 for the suction disc foot, the via hole 1101 penetrating the base 4 and for the suction disc foot assembly 10 suspended and inserted through the via hole 1101; and screw posts 1102 respectively fixed to the periphery of the via holes 1101 for the suction disc feet. The drainage gap 21 is disposed between the suction disc foot assembly 10 and the via hole 1101 for the suction disc foot.

### Example 4

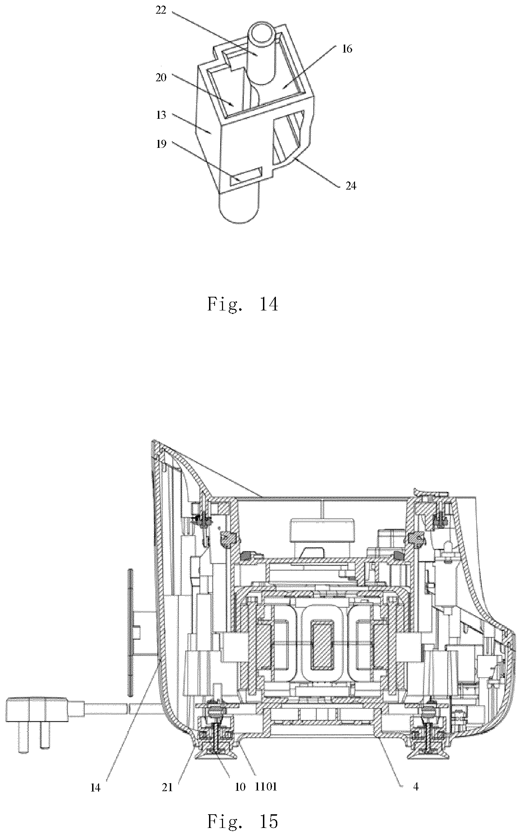

As shown Figs. 15-16, the upper end of the suction disc foot assembly 10 is connected to the screw post by a self-tapping screw. When the mainframe is placed on the desktop, the air in the suction cup foot at the lower end of the suction cup foot assembly 10 is squeezed out, so that the air pressure inside the suction cup foot is lower than the air pressure outside the suction cup foot, and the suction cup foot is less likely to be pulled up, which can reduce the vibration and displacement of the machine, increasing the stability of the machine. In addition, the suction cup foot assembly 10 is suspended through the via hole 1101 for the suction cup foot. First, when the cooking machine is stirred at a high speed, the via hole 1101 for the suction cup foot shakes around the suction cup foot assembly 10 without touching the suction cup foot assembly 10, which can buffer part of the vibration, reduce the vibration and displacement of the cooking machine. Secondly, the suction cup foot assembly 10 is provided with a load cell for weighing, and the structure and operation of the load cell is as described in the published patent CN201820306027.7 "weighing assembly structure for induction cooker", which will not be described in detail here. The suction cup foot assembly 10 is suspended through the via hole 1101 for the suction cup foot, even if the cooking machine is fully loaded with food in a place where the table top is inclined, the suction cup foot assembly 10 cannot touch the via hole 22 for the suction cup foot, which ensures the accuracy of weighing. Moreover, there is a drainage gap 21 between the suction cup foot assembly 10 and the via hole 1101 for the suction cup foot, so that the water on the base 4 can be drained through the drainage gap, preventing the problem that liquid in the base 4 cannot be discharged and preventing the water from entering the electrical components. A step-by-step drainage method is adopted, which can improve safety.

In sum, the present disclosure provides a safety link overflow structure applicable to a kitchen appliance, which adopts a step-by-step drainage method, has a simple structure, the efficient and practical drainage and improved safety.

The technical solution provided by the example of the present disclosure relates to a cover opening protection structure applicable to a kitchen appliance, and pertains to the field of kitchen appliances. Taking a stir-frying machine as an example, in the related art, at present, fora stir-frying machine products available in the market, the cover opening protection structure is complex and unstable. Some adopt photoelectric cover opening protection, but the photoelectric cover opening protection is unstable in the case of poor light, which has a potential danger. Some also adopt current microswitch detection using electric lock locking cup cover, which is too expensive. In view of this, the cover opening protection structure applicable to a kitchen appliance provided by the technical solution of the present disclosure is simple, reliable, practical, safe, stable, highly controllable, low in cost, and is suitable for market promotion in the field of kitchen appliances.

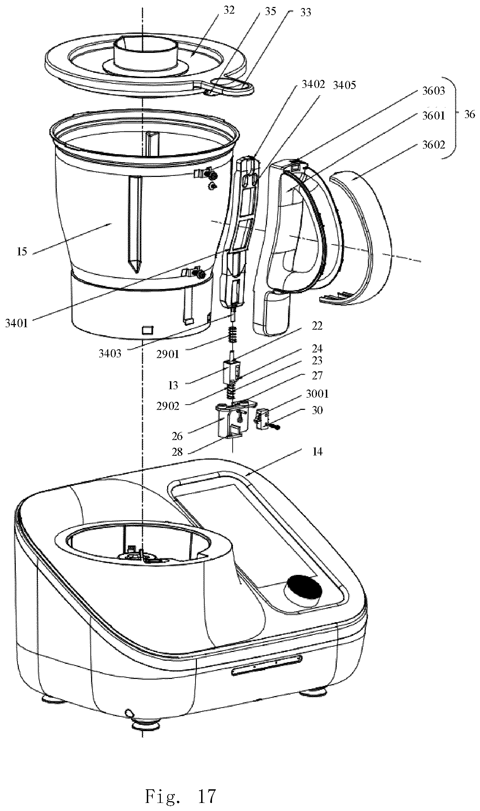

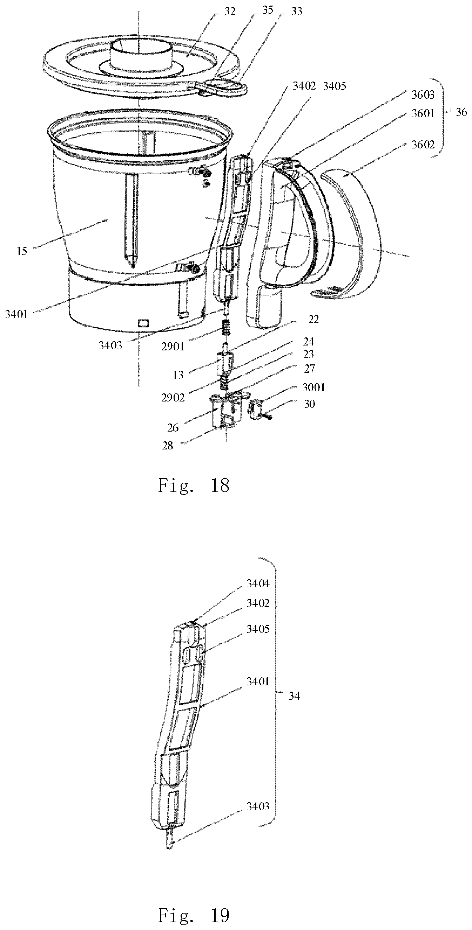

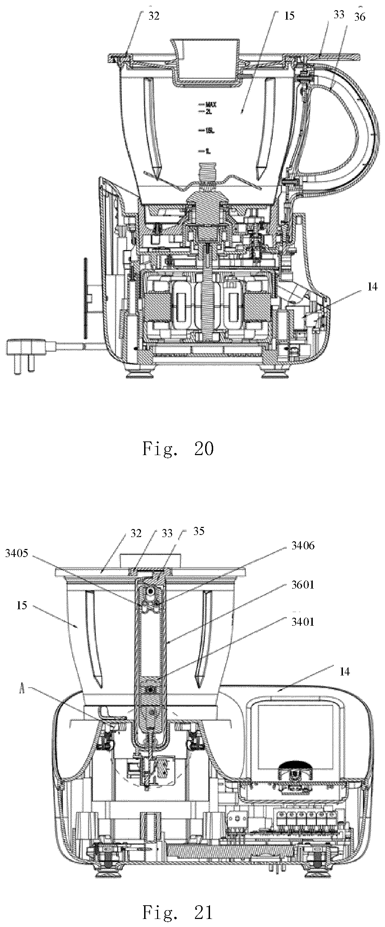

Figs. 17-24 illustratively shows the structural schematic diagrams of the cover opening protection structure applicable to a kitchen appliance provided by the technical solutions disclosed in the present disclosure.

### Example 5

A cover opening protection structure applicable to a kitchen appliance is assembled inside the kitchen appliance. The kitchen appliance includes a mainframe 14, a container cup 15 assembled on the mainframe 14, a screw lid 32 snapped on the container cup 15, a handle shell 36 fixedly connected to one side of the container cup 15, a screw handle 33 provided on the screw lid 32. The cover opening protection structure includes a handle safety link 34 which can move up and down inside the handle shell 36. The handle safety link 34 includes: a link body 3401; a driving inclined surface 3402 and a driving rod 3403 respectively provided on an upper part and a lower part of the link body 3401; a hook-type buckle 35 fixedly connected to the lower end of the screw lid 32, and having a buckle inclined surface 3501 formed at the lower part thereof for driving the handle safety link 34 to move up and down; a micro switch 30 assembled inside the mainframe, and the driving rod 3403 driving the elastic piece 3001 of the micro switch 30 to be pressed down/bounced up through the safety link body 13.

The kitchen appliance includes a container cup assembly 37, and the container cup assembly 37 includes a container cup 15.

Structure and Operation. In the technical solution, as shown in Figs. 17-18, the cover opening protection structure includes a hook-type buckle 35, a handle safety link 34, a safety link body 13 and a micro switch 30 arranged from top to bottom in space, which constitute a linkage system. The hook-type buckle 35 is fixedly connected to the lower end of the screw lid 32 and moves with the rotation of the screw lid. The handle safety link 34 is installed inside the handle shell 36 and can move up and down inside the handle shell 36. The driving rod 3403 thereof protrudes out of the handle shell 36. The micro switch 30 is assembled inside the mainframe 14. When the screw lid 32 is screwed in place clockwise, the buckle inclined surface 3501 of the hook-type buckle 35 squeezes the driving inclined surface 3402 so that the handle safety link 34 is pressed down as a whole, and at the same time, the handle safety link 34 pushes the safety link body 13 down, and at the same time, the safety link body 13 presses the elastic piece 3001 of the micro switch 30 down to the limit to trigger the micro switch 30 to form a closed circuit, the signal current that controls other electrical components is then turned on, and the electrical components start to work. On the other hand, when the screw lid 32 is unscrewed counterclockwise, the handle safety link 34 is reset when the buckle inclined surface 3501 of the hook-type buckle 35 is withdrawn, and at the same time the safety link body 13 is also reset, and the elastic piece 3001 of the micro switch 30 is restored to the free state. The micro switch 30 forms an open circuit. At that time, the signal current that controls the activation of other electrical components is turned off, and the electrical components stop working.

In this solution, the rotation of the screw lid 32 controls the handle safety link 34 and moves the safety link body 13 up and down to trigger the closing and opening of the elastic piece of the micro switch 30, in order to control the start and stop of other electrical components. The structure is simple, reliable, practical, safe, stable, highly controllable and low in cost, and is suitable for market promotion in the field of kitchen appliances.

It should be noted that the other electrical components mentioned above can be, but are not limited to, motors, and the on/off of the micro switch 30 can control the on/off of the signal current of the electrical component, and then control the on/off of the electrical component.

Furthermore, in this example, it can also be contemplated that the hook-type buckle 35 includes a support portion 3502 and a trigger portion 3503 which are connected as one body. The support portion 3502 is vertically fixed to the lower surface of the screw lid 32, and the buckle inclined surface 3501 is formed at the lower part of the trigger portion 3503. One side of the buckle inclined surface 3501 is recessed to form a positioning slot 3504. When the screw lid 32 is screwed in place clockwise, the trigger portion 3503 of the hook-type buckle 35 enters the handle shell, and the buckle inclined surface 3501 squeezes the driving inclined surface 3402 so that the handle safety link 34 is pressed down as a whole.

Furthermore, in this example, it can also be contemplated that the handle shell 36 includes a handle seat 3601 and a handle cover 3602 assembled on the handle seat 3601. Preferably, the handle seat 3601 is installed on the outer side of the container cup 15 along the length direction of the container cup 15. The handle seat 3601 is provided with a hollow working groove along its length direction, and the handle safety link 34 is disposed in the hollow working groove and can move up and down inside the hollow working groove. The upper part of the handle seat 3601 is provided with an opening 3603 for the trigger portion 3503 to enter therethrough, and the lower part of the handle seat 3601 is provided with a second via hole for the driving rod 3403 to freely extend therethrough. When the screw lid 32 is screwed in place clockwise, the trigger portion 3503 of the hook-type buckle 35 enters the hollow working groove through the opening 3603, and the buckle inclined surface 3501 presses the driving inclined surface 3402, so that the handle safety link 34 is pressed down as a whole. The driving rod 3403 moves down along the second via hole along with the handle safety link 34 and further extends beyond the handle seat 3601.

Furthermore, in this example, it can also be contemplated that one side of the driving inclined surface 3402 is raised with a positioning rib 3404 that matches with the positioning slot 3504. When the buckle inclined surface 3501 presses the driving inclined surface 3402, the driving inclined surface 3402 moves downwards until the positioning rib 3404 is just stuck in the positioning slot 3504, and the positioning rib 3404 and the positioning slot 3504 are restricted to each other, which has a positioning function, and the screw lid 32 will not easily loosen when the screw lid 32 is screwed tight.

Furthermore, in this example, it can also be contemplated that at least two sliding slots 3405 are formed on the link body 3401 along its length direction, and a first guiding wheel 3406 is engaged in the sliding slot 3405. The first guiding wheel 3406 is slidably connected with the sliding slot 3405, and the first guiding wheel 3406 is fixedly connected to the container cup 15 / the handle seat 3601. When the link body 3401 moves up and down, the sliding slot 3405 can move up and down on the first guiding wheel 3406 to have a guiding function and prevent the link body 3401 from displacing during the movement.

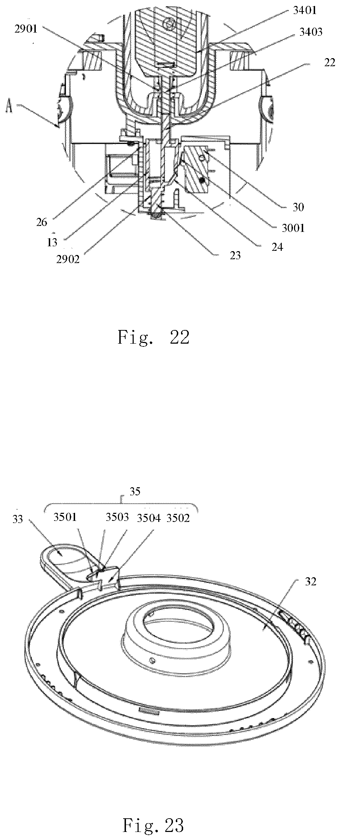

Furthermore, in this example, it can also be contemplated that a micro switch bracket 26 is also installed in the mainframe 14, and the mainframe safety link 13 and the micro switch 30 are respectively disposed in the micro switch bracket 26. As shown in Fig. 22, the micro switch bracket 26 is used for positioning/fixing the positions of the mainframe safety link 13 and the micro switch 30.

Furthermore, in this example, it can also be contemplated that the safety link body 13 has a side facing the micro switch 30 which forms a trigger inclined surface 24, and the upper and lower parts of the safety link body 13 are vertically connected to an upper trigger lever 22 and a lower trigger lever 23 respectively. The upper trigger lever 22 abuts against the driving rod 3403 above the upper trigger lever 22. When the assembling is completed, the safety link body 13 and the micro switch 30 are located in the micro switch bracket 26, and the safety link body 13 can move up and down in the safety link body 13. When the handle safety link 34 pushes down the upper trigger level 22 through the driving rod 3403, the safety link body 13 is pushed down accordingly, and the trigger inclined surface 24 of the safety link body 13 presses the elastic piece 3001 of the micro switch 30 down to the lower limit to trigger the micro switch 30 to form a closed circuit. On the other hand, when the handle safety link 34 is reset, the safety link body 13 is reset along with it, and the elastic piece of the micro switch returns to the free state. The operation is convenient.

Furthermore, in this example, it can also be contemplated that the upper part of the micro switch bracket 26 is provided with a slot 27 for inserting the safety link body 13, and the lower part thereof is provided with a first via hole 28 for the lower trigger lever 23 to extend out of there freely. The shape of the slot 27 is adapted to the shape of the safety link body 13 to prevent displacement and tipping.

Furthermore, in this example, it can also be contemplated that the micro switch 30 is fixed inside the micro switch bracket 26 by screws, and the elastic piece 3001 of the micro switch 30 is disposed facing the trigger inclined surface of the safety link body 13.

Furthermore, in this example, it can also be contemplated that it also includes a reset assembly, which includes an upper compression spring 2901 and a lower compression spring 2902 respectively sleeved on the driving rod 3403 and the lower trigger level 23. The upper compression spring 2901 is disposed between the link body 3401 and the second via hole, the lower compression spring 2902 is disposed between the safety link body 13 and the first via hole 28. When the screw lid 32 is rotated counterclockwise and released, when the hook-type buckle 35 is withdrawn from the b buckle inclined surface 3501, under the action of the elastic force of the upper compression spring 2901, the handle safety link 34 is reset, and at the same time, under the action of the elastic force of the lower compression spring 2902, the safety link body 13 is also reset, and the elastic piece 3001 of the micro switch 30 is restored to a free state at that time.

### Example 6

Example 6 of the present disclosure is further improved on basis of the Example 5, in order to fully exhibit the technical advantages of the present disclosure, which will be exemplified below.

For example, the micro switch 30 is disposed in the control circuit of the motor, and the on/off of the signal current of the motor in the mainframe 14 can be controlled by the on/off of the micro switch 30, and then the on/off of the motor can be controlled.

Structure and Operation. When the screw lid 32 is screwed clockwise into place, the buckle inclined surface 3501 of the hook-type buckle 35 presses the driving inclined surface 3402 to drive the handle safety link 34 down as a whole, and at the same time, the handle safety link 34 presses down the safety link body 13, and thus the safety link body 13 presses down the elastic piece 3001 of the micro switch 30 to the lower limit to trigger the micro switch 30 to form a closed circuit. At that time, the signal current that controls the start of the motor is turned on, and the motor starts to work. That is, the motor can start to work only upon detection that the screw lid 32 is screwed tightly on the container cup 15, which can meet the safety requirements and greatly reduce the probability of mechanical hazards. On the contrary, when the screw lid 32 is unscrewed counterclockwise, the handle safety link 34 is reset when the buckle inclined surface 3501 of the hook-type buckle 35 is withdrawn, and at the same time the safety link body 13 is also reset. At that time, the elastic piece 3001 of the micro switch 30 returns to the free state, and the micro switch 30 forms an open circuit. Then, the signal current that controls the start of the motor is turned off, and the motor stops working. That is, when the screw lid 32 is opened, the signal current that controls the start of the motor is turned off, which is safe and reliable, and greatly reduces the probability of mechanical danger.

The control operation. When the elastic piece of the micro switch 30 is pressed and triggered to form a closed circuit, the signal current that controls the motor to start is turned on, and the motor starts to work. When the elastic piece of the micro switch 30 is free to rebound and open to form an open circuit, the signal current that controls the motor is turned off, and the motor stops working. Through the screwing tight and loose of the screw lid 32, the handle safety link 34 is controlled to link to the safety link body 13 to move up and down, to trigger the closing of the elastic piece of the micro switch 30 to control the start and stop of the motor.

It should be noted that the specific structures, operation, and circuit structures of the motors, micro switches, and other electrical components used in the present disclosure are all known in the prior art, and therefore will not be described in detail.

To sum up, the present disclosure provides a cover opening protection structure with a simple, reliable and practical structure, which is safe, stable, highly controllable, and low in cost, and which is suitable for market promotion in the field of kitchen appliances.

### Example 7

The technical solution provided by the example of the present disclosure relates to a kitchen appliance, including a container cup fixing structure. The following description takes a stir-frying machine as an example.

A container cup fixing structure is assembled on the mainframe upper cover 2 of the mainframe 14. The mainframe upper cover 2 is configured to assemble a container cup assembly 37 therein. The container cup fixing structure includes locking buckle members 39 and a rotating ring 41. The number of the locking buckle members 39 is at least three, and the locking buckle members 39 are evenly distributed on the periphery of the mainframe upper cover 2. The locking buckle member 39 includes a locking buckle bracket 3901 and a locking buckle that can be extended/retracted on the locking buckle bracket 3901. Locking buckle openings 40 for the locking buckles to extend/retract therethrough are evenly provided on the mainframe upper cover 2. The rotating ring 41 is rotatably assembled on the periphery of the mainframe upper cover 2, and is provided with a release lever 42 for turning the rotating ring 41 to rotate, and rotating ring bosses 43 for driving the locking buckles to retract.

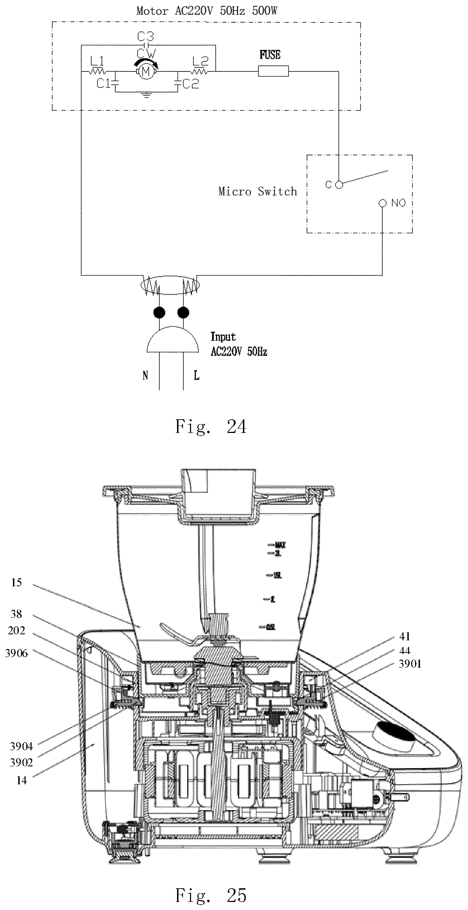

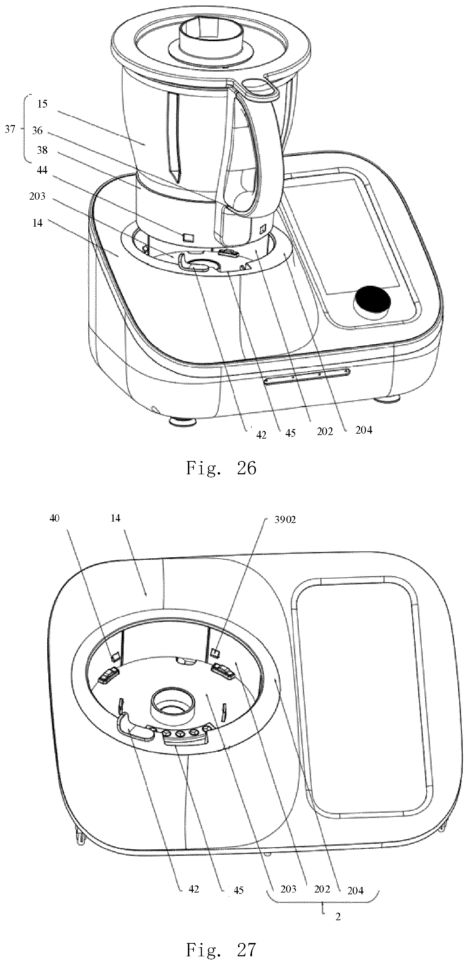

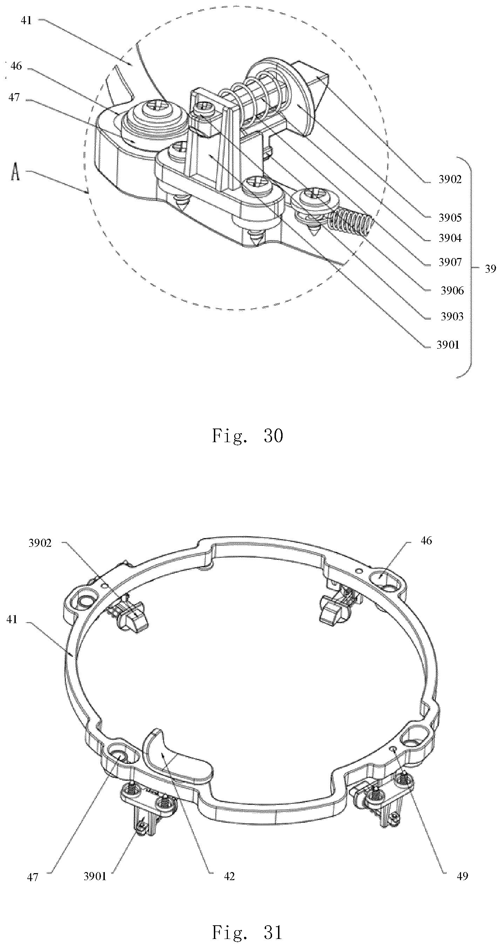

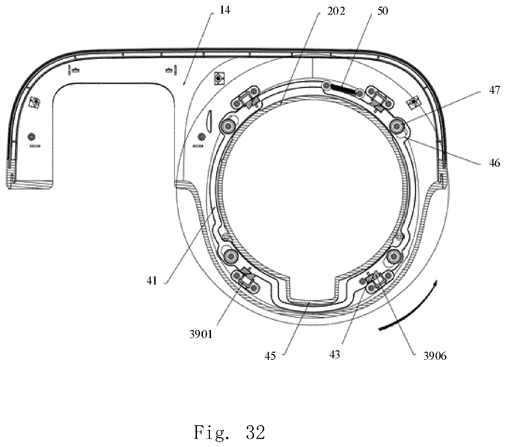

Structure and Operation. In the technical solution, as shown in Figs. 25-32, the container cup assembly 37 can be assembled inside the mainframe upper cover 2, and can be securely fixed on the mainframe 14 through the container cup fixing structure. The container cup fixing structure includes locking buckle members 39, locking buckle openings 40 for the locking buckle members 39 to extend/retract therethrough, a rotating ring 41 for driving the locking buckles to retract.

The locking operation of the locking buckle members 39. The number of the locking buckle members 39 is at least three, and the locking buckle members 39 are evenly distributed on the periphery of the mainframe upper cover 2. The locking buckle brackets 3901 are fixed on the mainframe 14, and the locking buckles can be extended/retracted on the locking buckle brackets 3901. In a free state, return springs on the locking buckle members 39 push the locking buckles outward, and make the ends of the locking buckles extend out of the locking buckle openings 40. When the container cup assembly 37 is put into the mainframe 14, the bottom edge of the container cup assembly 37 presses inclined surfaces of the locking buckle heads downward, and the locking buckles retract into the locking buckle openings 40. When the container cup assembly 37 is placed at the bottom, under the action of the elastic force of the return springs, the locking buckles are continued to extend outward and into the fixing holes of the container cup assembly 37 to implement the locking of the container cup assembly 37, so that the mainframe 14 can hold the container cup assembly 37 securely. With at least three locking buckle members 39, the container cup assembly 37 can be locked in all directions without concerning the problem that the container cup assembly 37 would come out or shake, which can greatly improve the user experience.

The unlocking operation of the locking buckle members 39. Since the release lever 42 is locked on the rotating ring 41, when the release lever 42 is turned clockwise, and the rotating ring bosses 43 of the rotating ring 41 press and expand locking buckle bosses of the locking buckle members 39, making the locking buckles retract into the locking buckle openings 40. When the locking buckles exit the fixing holes of the container cup assembly 37, the container cup assembly 37 can be lifted, and thus the container cup assembly 37 can be easily unlocked by the release lever 42, which is easy to operate.

Furthermore, in this example, it can also be contemplated that the container cup assembly 37 includes a container cup 15, a cup holder 38, and a handle shell 36, which are integrally installed. The cup holder 38 is uniformly provided with at least three fixing holes 44 for the locks to be inserted in one-to-one correspondence. The fixing hole 44 is used for the end of the lock to extend in/out and implement the locking/unlocking of the container cup assembly 37.

Furthermore, in this example, it can also be contemplated that the mainframe upper cover 2 is a cylindrical groove structure formed by concave downward from the upper surface of the mainframe 14. The mainframe upper cover 2 includes an upper cover side wall 202 in a cylindrical surface form, an upper cover bottom wall 203 closing at the lower part of the upper cover side wall 202, and a circle of upper cover outer edge 204 formed on the upper edge of the upper cover side wall 202 and extending outwards. The mainframe upper cover 2 can be used for installing the container cup assembly 37.

Furthermore, in this example, it can also be contemplated that one side of the upper cover side wall 202 and upper cover outer edge 204 is provided with an avoiding slot 45 for avoiding the lower end of the handle shell 36. In assembling, the cup holder 38 along with the container cup assembly 37 is inserted into the mainframe upper cover 2, and the handle shell 36 is aligned with the avoiding slot 45 and inserted therein. It should be noted that the avoiding slot 45 is opened on the side of the mainframe upper cover 2 for avoiding the lower end of the handle shell 36, and the avoiding slot 45 can also have a positioning function, so that the container cup assembly 37 can only be inserted into the mainframe upper cover 2 in one direction.

Furthermore, in this example, it can also be contemplated that the locking buckle bracket 3901 is fixed on the mainframe 14 on the periphery of the upper cover side wall 202, the plane where the locking buckle bracket 3901 is located is tangent to the upper cover outer edge 204, and the central axis of the locking buckle bracket 3901 and the central axis of the locking buckle are perpendicular to each other, and a sliding hole for sliding fit with the locking buckle is opened therethrough on the locking buckle bracket 3901. The locking buckle can be extended/retracted on the locking buckle bracket 3901.

Furthermore, in this example, it can also be contemplated that the locking buckle includes:
a locking buckle sliding portion 3904, the locking buckle sliding portion 3904 being perpendicular to the locking buckle bracket 3901 and can slide freely inside the sliding hole, the line of the axis of the locking buckle sliding portion 3904 being parallel to the radial direction of the mainframe upper cover 2, and the locking buckle sliding portion 3904 being provided with a limit block 3903 at one end away from the upper cover side wall 202;
a locking buckle head 3902, the locking buckle head 3902 being installed at one end of the locking buckle sliding portion 3904 proximate to the upper cover side wall 202, the locking buckle head 3902 having a right-angle trapezoidal block structure, a limit ring being provided between the locking buckle head 3902 and the locking buckle sliding portion 3904, the size of the limit ring being much larger than the size of the locking buckle opening 40, to prevent the locking buckle head 3902 from extending outward too much, the thickness of the part of the locking buckle head 3902 away from the locking buckle sliding portion 3904 being smaller than the thickness of the part of the locking buckle head 3902 proximate to the locking buckle sliding portion 3904, the upper surface of the locking buckle head 3902 being an inclined surface and the lower surface of the locking buckle head 3902 being a horizontal surface;
a locking buckle boss 3906, the locking buckle boss 3906 being installed on the locking sliding part, and being a right-angle trapezoidal block structure;
a return spring 3907, the return spring 3907 being sleeved on the locking buckle sliding portion 3904 between the locking buckle bracket 3901 and a limit ring 3905.

The locking of the locking buckles: the number of the locking buckle brackets 3901 is at least three, and the locking buckle brackets 3901 are evenly distributed on the periphery of the mainframe upper cover 2. The locking buckles can be extended/retracted on the locking buckle brackets 3901. In a free state, the return springs 3907 are in a freely stretched state to push the locking buckle heads 3902 outward, and the locking buckle heads 3902 extend to the outside of the locking buckle openings 40. When the container cup assembly 37 is placed in the mainframe 14, the bottom edge of the container cup assembly 37 presses down the inclined surfaces of the locking buckle heads 3902, and the locking buckle heads 3902 are pressed to retract into the locking buckle openings 40. At that time, the return springs are in a compressed state. When the container cup assembly 37 is placed at the bottom, under the elastic force of the return springs 3907, the locking buckle heads 3902 continues to extend outward and into the fixing holes 44 of the container cup assembly 37 to implement the locking of the container cup assembly 37. The container cup assembly 37 can be locked in all directions through at least three locking buckle members 39, and there is no need to worry about the problem of the container cup assembly 37 coming out or shaking, which can greatly improve the user experience.

The unlocking of the locking buckles: since the release lever 42 is locked on the rotating ring 41, when the release lever 42 is turned clockwise, the rotating ring bosses 43 of the rotating ring 41 press and expand the locking buckle bosses 3906 of the locking buckle members 39, the locking buckle sliding portions 3904 then move in the sliding holes, and then the locking buckle heads 3902 retract into the locking buckle openings 40. When the locking buckle heads 3902 exit the fixing holes 44 of the container cup assembly 37, the container cup assembly 37 can be lifted up, and the container cup assembly 37 can be easily unlocked by the release lever 42, and the operation is convenient.

Furthermore, in this example, it can also be contemplated that the rotating ring 41 has a ring structure. The rotating ring 41 is provided with at least three arc-shaped sliding slots 46 at equal intervals along the circumferential direction of the rotating ring 41. The arc-shaped sliding slot 46 is engaged with a second guiding wheel 47. The second guiding wheel 47 is slidably connected to the arc-shaped sliding slot 46 and the second guiding wheel 47 is fixedly connected to the upper cover outer edge 204. The rotating ring 41 is formed with an avoiding portion protruding outward for avoiding the avoiding slot 45.

Furthermore, in this example, it can also be contemplated that an arc-shaped through slot is provided extending along a circumferential direction of the upper cover outer edge 204 and penetrating the upper cover outer edge 204. The release lever 42 is located above the arc-shaped through slot, and the lower end of the release lever 42 is fixedly connected to the rotating ring 41 through a connecting rod 48. The connecting rod 48 is movably inserted into the arc-shaped through slot.

Furthermore, in this example, it can also be contemplated that at least three ball grooves are provided at equal intervals on the upper surface of the rotating ring 41. A steel ball 49 is installed in the ball groove. The steel ball 49 can rotate freely in the ball groove, and the upper end of the steel ball 49 is exposed outside the ball groove.

The rotating operation of the rotating ring 41. The rotating ring 41 is fixed on the mainframe upper cover 2 through at least three second guide wheels 47, and the second guide wheels 47 are slidably connected to arc-shaped slots 46. When the release lever 42 is pushed clockwise, the arc-shaped sliding slots 46 slides along the second guide wheels 47 and cooperate with the steel balls 49 to make the rotating ring 41 rotate smoothly. At this time, the tension spring 50 is in an elongated state. When the force acting on the release lever 42 disappears, the tension spring 50 pulls the rotating ring 41 tight in a counterclockwise direction, preventing the rotating ring 41 from affecting the return spring to push the locking buckle outward.

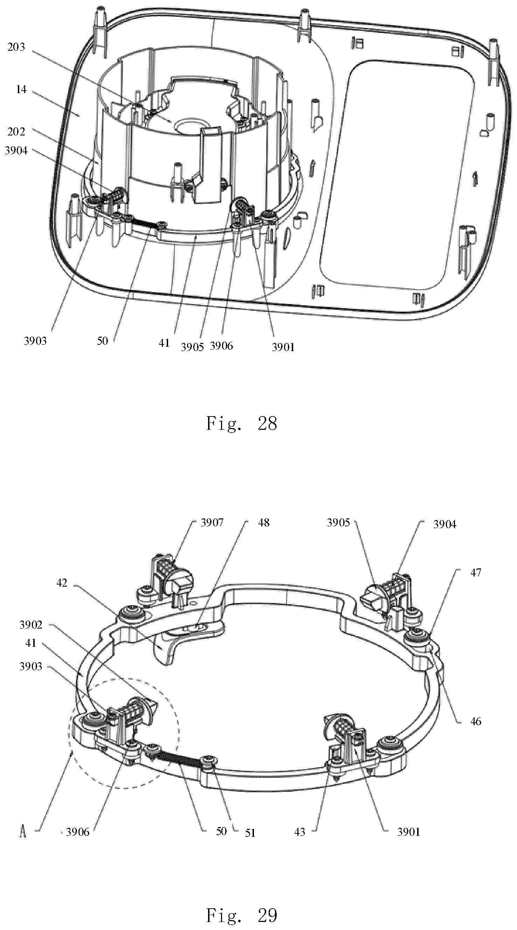

Furthermore, in this example, it can also be contemplated that the number of the rotating ring bosses 43 is the same as the number of the locking buckle members 39, and the rotating ring bosses 43 are located at one side of the locking buckle members 39 in a one-to-one correspondence. The rotating ring boss 43 is a right-angled trapezoidal block structure, and the inclined surface of the rotating ring boss 43 is opposite to the inclined surface of the locking buckle boss 3906. As shown in FIGS. 29-32, when the release lever 42 is pushed clockwise, the rotating ring bosses 43 move along with it and press the locking buckle bosses 3906. The locking buckle sliding portion 3904 is driven to move within the sliding hole, and then the locking buckle head 3902 is retracted into the locking buckle opening 40. On the contrary, when the force acting on the release lever 42 disappears, the tension spring 50 pulls the rotating ring 41 tight in a counterclockwise direction. The rotating ring 41, the rotating ring boss 43, and the locking buckle are reset.

Furthermore, in this example, it can also be contemplated that a tension spring 50 is provided. The tension spring 50 has one end fixed on the rotating ring 41 through a self-tapping screw with a pad 51 and the other end fixed on the upper cover outer edge 204 through a self-tapping screw with a pad 51. When the force acting on the release lever 42 disappears, the tension spring 17 pulls the rotating ring 41 tight in a counterclockwise direction, preventing the rotating ring 41 from affecting the return spring to push the locking buckle outward, thus allowing the container cup fixing structure suitable for repeated operations.

In sum, the present disclosure provides a container cup fixing structure which can realize all-round locking of the container cup assembly, without concerning the problem of the container cup assembly coming out or shaking, and greatly improving the user experience.

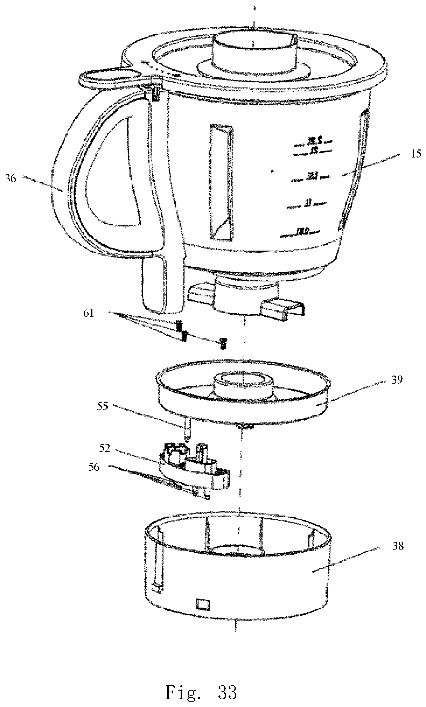

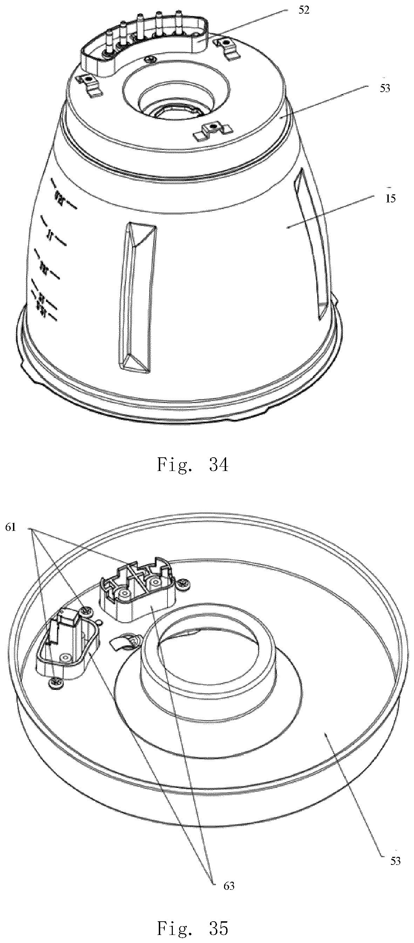

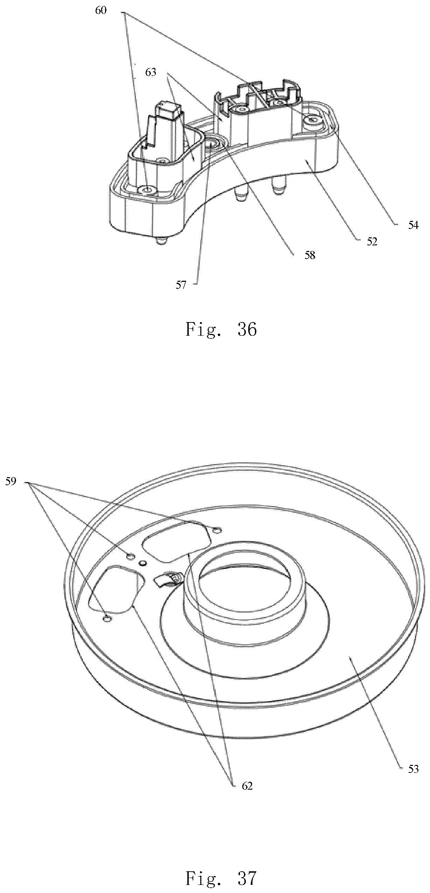

A coupler fixing structure provided by the technical solution of the present disclosure can effectively prevent the user's misoperation causing liquid in the cup bottom cover to enter the interior and cause short circuit damage to the electrical components, and is suitable for market promotion in the field of kitchen appliances, as shown in Figs. 33-37.

### Example 8

A kitchen appliance includes a coupler fixing structure and a coupler 52. The coupler fixing structure is configured to secure the coupler 52 on a cup bottom structure of the container cup assembly. The coupler fixing structure includes: a sealing structure, arranged on an end surface of the coupler 52 which is attached to the cup bottom structure and used to close a gap between the coupler 52 and the cup bottom structure; and a connecting structure, the coupler 52 and the cup bottom structure being fixedly connected through the connecting structure.

Structure and Operation: in this technical solution, the coupler 52 is fixed on the cup bottom structure of the container cup assembly through the coupler fixing structure. The coupler fixing structure includes a sealing structure and a connecting structure. When the coupler is installed, firstly sealant is injected into the sealing structure of the coupler, then the coupler is attached to the installation position of the coupler of the cup bottom cover which is in the cup bottom structure and is fixedly connected to the cup bottom structure through the connecting structure. After the sealant dries, a sealing is formed in the gap between the coupler and the cup bottom cover, so that the cup bottom cover is completely sealed, effectively avoiding the user's misoperation causing liquid in the cup bottom cover to enter the interior and cause short-circuit damage to electrical components. In addition, the container cup assembly can be soaked in water as a whole or put into the dishwasher as a whole, so that it is easier to clean the food residues in dead corners of the container cup and improve the user experience.

Furthermore, in this example, it can also be contemplated that the container cup assembly includes the container cup 15, the handle shell 36 and the cup bottom structure installed in one piece, and the cup bottom structure includes the cup bottom cover 53 and the cup holder 38 installed in one piece. The coupler 52 is installed between the cup bottom cover 53 and the cup holder 38, and the upper end surface of the coupler 52 is fit together with the lower end surface of the cup bottom cover 5.

Furthermore, in this example, it can also be contemplated that the sealing structure includes at least one circle of sealing slot 54 opened on the upper end face of the coupler 52 and used for filling the sealing element. The sealing element can be, but is not limited to, a sealant, or a silicone sealing ring that matches the shape of the sealing slot 54. The sealant is injected into the sealing slot 54, or the silicone sealing ring is put into the sealing slot 54. When the upper end surface of the coupler 52 is fit together with the lower end surface of the cup bottom cover 53, the sealant/silicone sealing ring can fill the gap between the coupler 52 and the cup bottom cover 53, having a sealing effect between the outer edge of the coupler 52 and the cup bottom cover.

Furthermore, in this example, it can also be contemplated that the sealing slot 54 is in a closed shape, and the shape of the sealing slot 54 is similar to the shape of the outer contour of the coupler 52 and is arranged close to the outer edge of the coupler 52. After the sealant dries, the outer edge of the coupler 52 and the cup bottom cover are sealed.

Furthermore, in this example, it can also be contemplated that when the sealing slot 54 is provided not less than two circles, the sealing slot 54 is proportionally reduced according to the outer contour shape of the coupler 52 and arranged from the outside to the inside. The arrangement of the multi-circle sealing slot 54 further improves the sealing effect between the coupler 52 and the cup bottom cover.

Furthermore, in this example, it can also be contemplated that a metal ground pin 55 and a conductive pin 56 vertically arranged are respectively installed on the lower end surfaces of the cup bottom cover 53 and the coupler 52. The coupler 52 is also provided with a punch hole 57 for the metal ground pin 55 to pass through, and an annular sealing layer is arranged in the punch hole 57. When the metal ground pin 55 is inserted into the punch hole 57, water cannot enter between the metal ground pin 55 and the via hole 57. The metal ground pin 55 is assembled by welding with the cup bottom cover, and the conductive pin 56 is assembled on the coupler by in-mold injection molding.

Furthermore, in this example, it can also be contemplated that at least one circle of sealing annular slot 58 for filling the sealing element is further formed on the upper end surface of the coupler 52, and the sealing annular slot 58 surrounds the periphery of the punch hole 57. As shown in FIG. 4, the sealing annular slot 58 is concentric with the punch hole 57, and the sealant is injected into the sealing annular slot 58, or the silicone sealing ring is placed inside the sealing annular slot 58. When the upper end face of the coupler 52 is fit together with the lower end face of the cup bottom cover, the sealant/silicone sealing ring can fill the gap between the coupler 52 at the periphery of the punch hole 57 and the cup bottom cover to seal the gap between the punch hole 57 and the cup bottom cover, preventing water from passing through the punch hole 57 and entering between the coupler 52 and the cup bottom cover, so that the cup bottom cover is completely sealed, which can effectively avoid the user's misoperation that might cause liquid to enter the bottom cover and cause short circuit damage to the electrical components.

Furthermore, in this example, it can also be contemplated that the connecting structure includes at least two pairs of connecting hole 59 and connecting screw hole 60 which are respectively provided on the cup bottom cover 53 and the coupler 52 and correspond to each other. The connecting hole 59 and the connecting screw hole 60 are fixedly connected by a connecting screw 61. By locking the connecting screw on the connecting screw hole 60, the coupler 52 is fixedly connected to the cup bottom structure through the connecting structure. The structure is simple and easy to install and disassemble.

Furthermore, in this example, it can also be contemplated that the coupler fixing structure further includes a positioning structure, and the positioning structure includes at least a pair of positioning notch 62 and positioning perimeter 63 which are respectively arranged on the cup bottom cover 53 and the coupler 52 and are engaged and positioned with each other. The positioning notch 62 is opened on the cup bottom cover 53, the positioning perimeter 63 is integrally formed by raising on the upper end of the coupler 52, and the positioning perimeter 63 is used to be matched with the positioning notch for assembling and positioning and for positioning internal wires. That is, the positioning structure has a positioning effect to prevent the coupler 52 from being displaced on the cup bottom cover.

In sum, the present disclosure provides a coupler fixing structure and a kitchen appliance using the same, which can effectively prevent the user's misoperation causing liquid in the cup bottom cover to enter the interior and cause short-circuit damage to electrical components.

### Example 9

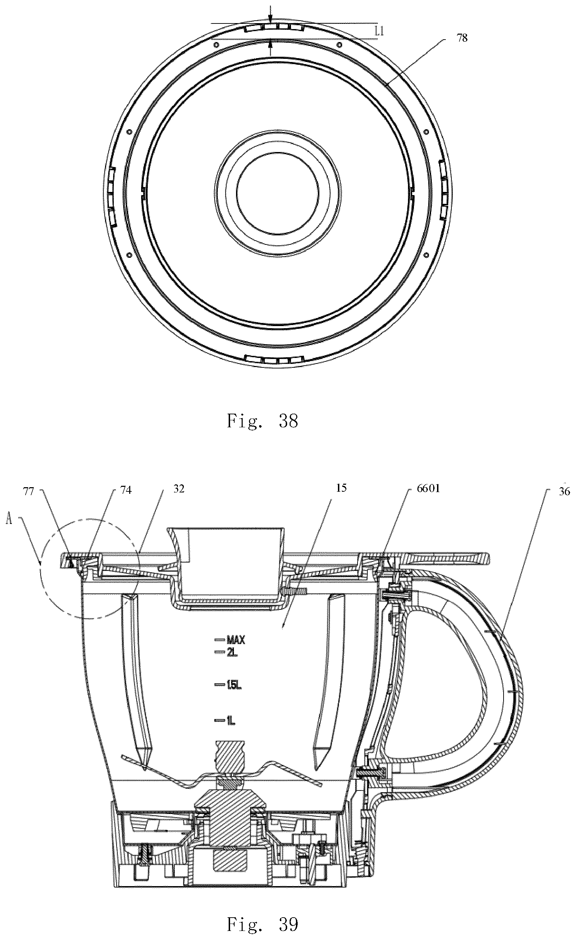

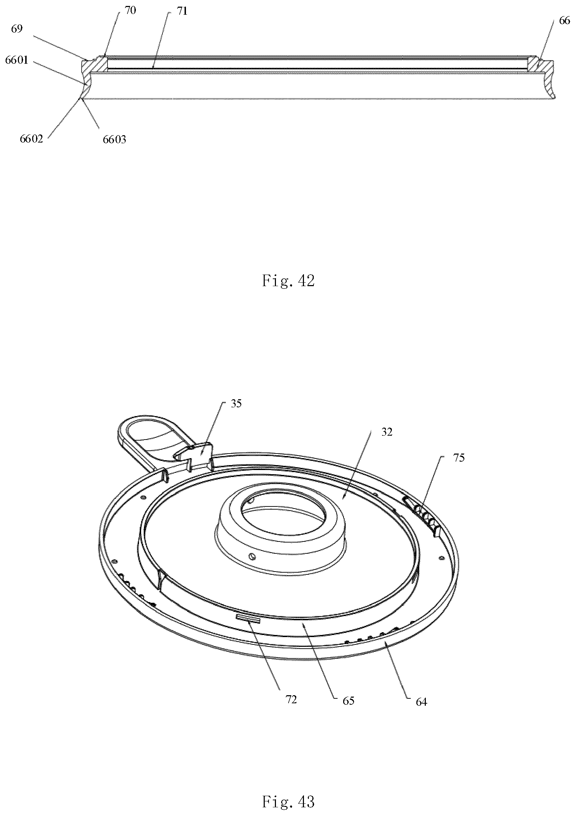

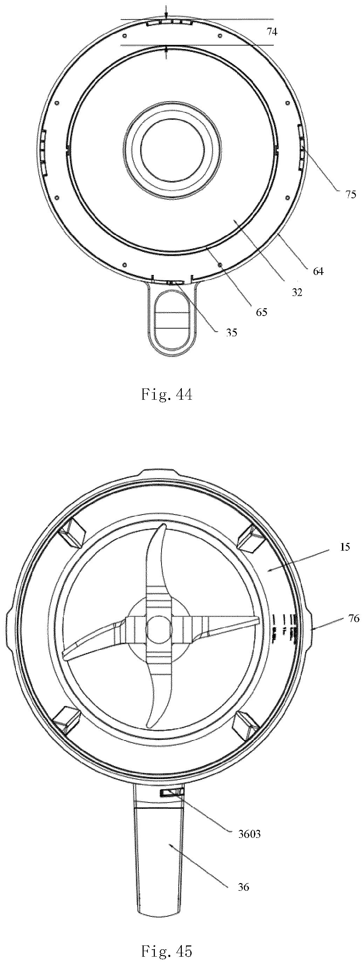

As shown FIGS. 38-45, a kitchen appliance includes a screw lid sealing structure and a screw lid 32.

A screw lid sealing structure for a kitchen appliance is assembled on the screw lid 32. The outer periphery of the bottom surface of the screw lid 32 has an outer edge of the lid 64. The bottom surface of the screw lid 32 is also provided with a circle of annular wall 65 integrally connected with it. It is characterized in that: the screw lid sealing structure includes: a sealing ring assembly, which includes a sealing ring 66 sleeved on the annular wall 65, an upper bracket 67 arranged between the sealing ring 66 and the annular wall 65 for limiting everting of the upper part of the sealing ring 66 and a lower bracket 68 for compressing the sealing ring 66 and limiting displacement of the sealing ring 66. The edge of the sealing ring 66 is formed with at least one layer of flange 6601 with the lower part everted, the outer edge of the free end of the flange 6601 is an R angle sealing portion 6602, and the inner edge is a parting line position 6603. There are at least three screw lid and screw buckle assemblies, and the assemblies are distributed at intervals on the inner side of the outer edge of the lid 64.

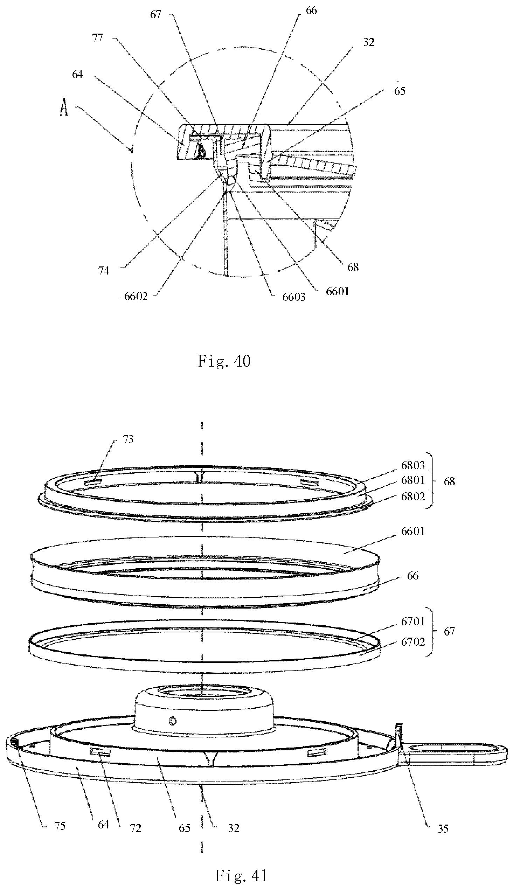

Structure and Operation. In this technical solution, the screw lid sealing structure is assembled on the screw lid 32, and the screw lid sealing structure includes a sealing ring assembly and a screw lid and screw buckle assembly; wherein the sealing ring assembly includes a sealing ring 66 sleeved on the annular wall 65, an upper bracket 67 arranged between the sealing ring 66 and the annular wall 65 for limiting everting of the upper part of the sealing ring 66, and a lower bracket 68 for compressing the sealing ring 66 and limiting displacement of the sealing ring 66. As shown in FIGS. 40-42, first, the upper bracket 67 is sleeved on the sealing ring 66 and is also sleeved on the annular wall 65. The upper bracket 67 can limit everting of the upper part of the sealing ring 66, and then ensure the sealing performance of the sealing ring. Then, the lower bracket 68 is pressed tightly on the sealing ring 66 and fixed with the annular wall 65 to prevent the sealing ring from moving up and down, so as to realize the fixing of the positions of the upper bracket 67, the sealing ring 66 and the lower bracket 68, which is convenient to assemble and disassemble. The upper bracket 67, the sealing ring 66, and the lower bracket 68 can be removed from the screw lid 32 respectively. While in the related art, the rib 78 is directly formed on the screw lid 32 (as shown in FIG. 38), which will result in a problem that the length of the release stroke L1 of the screw buckle assembly is insufficient, so that the screw buckle assembly cannot be made using a mold. In this technical solution, a separate upper bracket 67 is made, which can not only allow the screw buckle assembly of the screw lid 32 to be released from the mold, but also can withstand the sealing ring 66 to prevent everting. The structure is simple and has strong practicability. The edge of the sealing ring 66 is formed with at least one layer of flange 6601 with the lower part everting. The everting flange 6601 fits to the container cup tighter when subject to impulsive force and pressure of stirring liquid, having a further sealing effect. The outer edge of the free end of the outer flange 6601 is an R angle sealing portion 6602, and the inner edge is a parting line position 6603. As shown in FIGS. 39-42, when the screw lid 32 is snapped on the container cup 15, the R angle sealing portion 6602 abuts against water sealing contact position of the container cup 15. While in the related art, the conventional sealing ring here is at a parting line position, and since the parting line position can produce a glitch, which is an uneven surface and likely to fail to seal the water, the sealing effect is poor. In this technical solution, the parting line position 6603 is arranged on the inner edge of the free end of the flange 6601. Even if there is a glitch at this position, since it does not contact the sealing surface of the container cup, there is no need to worry about the sealing problem. The R angle sealing portion 6602 is arranged on the outer edge of the free end of the outer flange 6601, and is in close contact with the sealing surface of the container cup, which greatly improves the sealing effect. The screw lid sealing structure further includes a screw lid and screw buckle assembly, through which the screw lid can be locked or unlocked to the container cup, and the operation is convenient and the practicability is high.

Furthermore, in this example, it can also be contemplated that in this example, it can also be contemplated that the longitudinal section of the upper bracket 67 is in a " ┌" shape, which includes a first annular base portion 6701 lying horizontally, and an annular rib portion 6702 formed on the outer edge of the first annular base portion 6701 and extending downwardly for wrapping the upper peripheral portion of the seal ring 66. The first annular base portion 6701 is located between the sealing ring 66 and the screw lid 32, and the annular rib portion 6702 wraps the upper peripheral portion of the sealing ring 66 to restrict the upper part of the sealing ring 66 from everting, thereby ensuring the sealing performance of the sealing ring.

Furthermore, in this example, it can also be contemplated that the mold release stroke of the screw buckle assembly is formed between the annular wall 65 and the outer edge of the lid 64, and the width of the mold release stroke of the screw buckle assembly is at least 18 mm. The length L2 of the mold release stroke of the screw buckle assembly is sufficient to meet the production of the mold, and an annular buckle groove that can be fastened with the container cup 15 is formed between the annular rib portion 6702 and the outer edge of the lid 64.

Furthermore, in this example, it can also be contemplated that the upper part of the sealing ring 66 is provided with a lid ring groove 69 for avoiding the first annular base portion 6701, and the upper part of the sealing ring 66 and the lid ring groove 69 are respectively raised and formed with at least one circle of annular sealing flange 70. The annular sealing flange 70 has a sealing effect to prevent debris from entering the gap between the sealing ring 66 and the upper bracket 67 and the screw lid 32, and also facilitates subsequent cleaning.

Furthermore, in this example, it can also be contemplated that the lower bracket 68 includes an annular connecting portion 6801, a second annular base portion 6802 and a third annular base portion 6803 respectively formed at the upper and lower ends of the annular connecting portion 6801 and extending in opposite directions to each other. The second annular base portion 6802 and the third annular base portion 6803 are parallel to each other, and are used to support the sealing ring 66 and the lower end of the annular wall 65 respectively, preventing the sealing ring 66 from moving up and down.

Furthermore, in this example, it can also be contemplated that at least one circle of annular sealing step 71 is formed on the inner protrusion of the sealing ring 66. The annular sealing step 71 has a sealing effect to prevent debris from entering the gap between the sealing ring 66 and the annular wall 65, and also facilitates subsequent cleaning.

Furthermore, in this example, it can also be contemplated that a snap structure is further provided between the annular connecting portion 6801 and the annular wall 65, and the snap structure includes at least three buckle slots 72 in an annular array evenly distributed on the outer side of the annular wall 65, and at least three buckles 73 that are evenly arranged in an annular array on the inner side of the annular connecting portion 6801 and are adapted to the buckle slots 72. The number of the buckle slots 72 and the number of the buckles 73 are the same, and the buckle slots 72 and the buckles 73 are arranged in one-to-one correspondence. The lower bracket 68 and the annular wall 65 connected by the snap structure have a simple, practical and aesthetic structure, improve the assembly efficiency and assembly effect between the lower bracket 68 and the annular wall 65, and are easy to assemble, which is convenient for users to disassemble and install by themselves and thoroughly clean all parts.

Furthermore, in this example, it can also be contemplated that the opening end of the container cup 15 is upwardly bent at least once to form at least one inclined surface 74, and the upper end of the container cup 15 is provided with a cup rim 77 along the horizontal direction. When the screw lid 32 is installed on the container cup 15, the inclined surface 74 is arranged so that the contact area and the amount of interference between the sealing ring and the annular inclined surface 74 of the container cup are very small, which can reduce the interference stroke between the sealing ring 66 and the container cup 15 when installing. The friction between the sealing ring and the container cup is very small, which is conducive to the easy tightening of the screw lid, and the R angle sealing portion 6602 abuts against the inclined surface 74 of the container cup 15, which can greatly improve the sealing effect.

Furthermore, in this example, it can also be contemplated that the screw lid screw assembly includes at least one hook-type buckle 35 and at least two screw buckles 75. The outer side of the cup rim 77 is also protruded with raised structures 76 which can be screwed into the screw buckles 75 in a one-to-one correspondence.

Furthermore, in this example, it can also be contemplated that a handle shell 36 is provided on one side of the container cup 15, and an opening 3603 is provided on the upper part of the handle shell 36 for the hook-type buckle 35 to partially enter. When the screw lid 32 is installed on the container cup 15, the raised structures 76 on the outer side of the cup rim 77 are screwed into the screw buckles 75 on the screw lid, and the hook-type buckle 35 partially enters the opening 3603 of the handle shell 36, to realize double locking.

In sum, the present disclosure provides a cup lid sealing structure for a stir-frying machine, which can reduce the contact area and interference amount between the sealing ring and the container cup, facilitate easy installing of the lid, and improve the success rate of mold ejection and sealing effect.

### Example 10

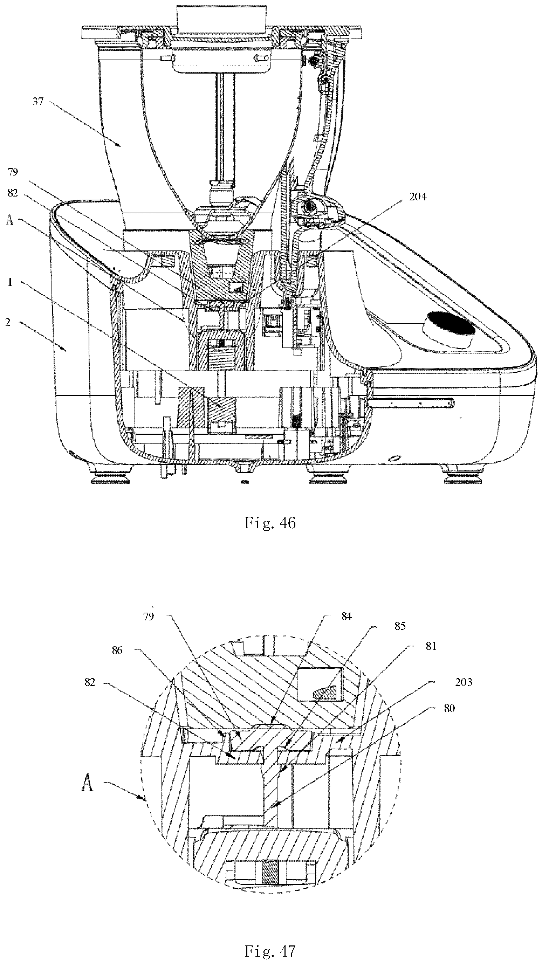

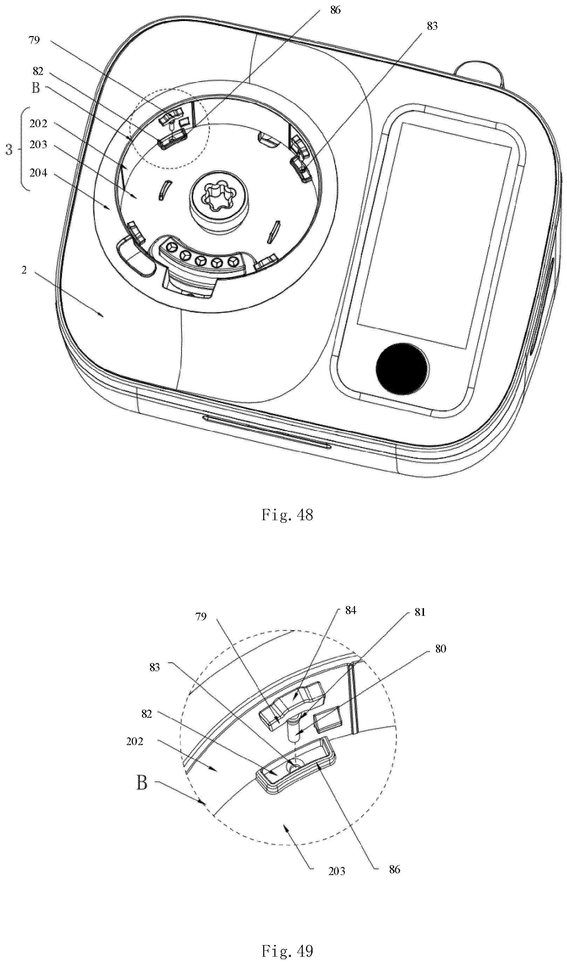

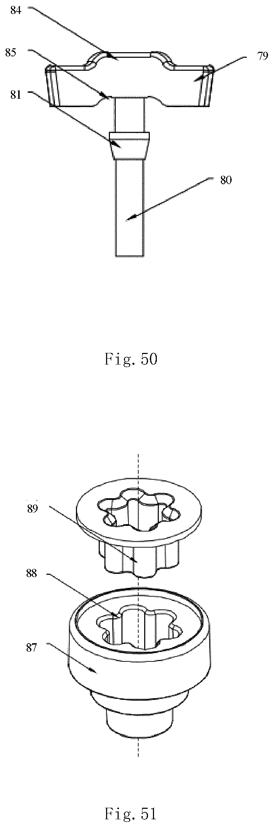

As shown in FIGS. 46-51, the technical solutions provided by the examples of the present disclosure relate to a shockproof structure for a container cup applicable to a kitchen appliance, and relate to the field of kitchen appliances. Taking a stir-frying machine product as an example, a container cup shockproof structure applicable to a kitchen appliance is assembled in the mainframe upper cover 2 of the mainframe 14, and the mainframe upper cover 2 is used for assembling the container cup assembly 37, which includes at least three shockproof structures evenly distributed in the mainframe upper cover 2. The shockproof structure includes a shockproof pad structure and a shockproof seat structure. The shockproof pad structure includes an arch-shaped shockproof pad body 79 and a shockproof pad support rod 80 which are formed integrally, as well as a limiting step 81 disposed on the shockproof pad support rod 80. The shockproof seat structure is integrally formed on the inner surface of the mainframe upper cover 2, and includes a shockproof seat body 82 for receiving the arch-shaped shockproof pad body 79 and a limiting hole 83 for inserting the shockproof pad support rod 80.

Structure and Operation. In this technical solution, shockproof structures are evenly distributed on the inner surface of the mainframe upper cover 2. The shockproof pad structure includes a shockproof pad structure and a shockproof seat structure. The shockproof seat structure is integrally formed on the inner surface of the mainframe upper cover 2. When the shockproof pad structure is assembled with the shockproof seat structure, the shockproof pad support rod 80 is matched and inserted into the limiting hole 83, and the limiting step 81 is stuck under the limiting hole 83, so that the shockproof pad structure cannot be displaced in the vertical direction. The arch-shaped shockproof pad body 79 is matched and installed in the shockproof seat body 82, so that the shockproof pad structure cannot be displaced in the horizontal direction. At that time, the upper part of the arch-shaped shockproof pad body 79 is exposed above the shockproof seat body 82. When the container cup assembly 37 is placed in the mainframe 14, the bottom edge of the container cup assembly 37 contacts and presses the upper end of the arch-shaped shockproof pad body 79. Preferably, the arch-shaped shockproof pad body 79 is made of soft rubber. The arch-shaped shockproof pad body 79 is designed into an arch shape, which can bear weight and undergo certain elastic deformation, that is, it can be compressed and rebound, which can effectively reduce vibration. In this example, a plurality of arch-shaped shockproof pad bodies 79 made of soft rubber are provided between the mainframe cover and the container cup assembly, to avoid direct contact between hard rubbers, having a cushioning and shock-absorbing effect. The noise and vibration of the whole machine can be greatly reduced, providing a better user experience.

Furthermore, in this example, it can also be contemplated that the mainframe upper cover 2 is a cylindrical groove structure formed by a depression from the upper surface of the mainframe 14, which includes an upper cover side wall 202 in a cylindrical surface form, an upper cover bottom wall 203 closing at the lower part of the upper cover side wall 202, and a circle of upper cover outer edge 204 formed on the upper edge of the upper cover side wall 202 and extending outwards. The mainframe upper cover 2 can be used to install the container cup assembly 37.

Furthermore, in this example, it can also be contemplated that the upper middle part of the arch-shaped shockproof pad body 79 protrudes upward to form an elastic protrusion 84, and the lower middle part of the arch-shaped shockproof pad body 79 recesses upward to form a recessed space 85. The surface of the arch-shaped shockproof pad body 79 is in an arc transition shape. When the container cup assembly 37 is put into the mainframe 14, the bottom edge of the container cup assembly 37 contacts and presses the upper end of the arch-shaped shockproof pad body 79. The elastic protrusion 84 can bear weight and undergo certain elastic deformation, and can effectively reduce vibration. Since the lower middle part of the arch-shaped shockproof pad body 79 recesses upward to form a recessed space 85, when the elastic protrusion 84 is pressed and deformed, the recessed space 85 not only can provide more deformation space for the elastic protrusion 84, but also can help the subsequent reset and rebound of the elastic protrusion 84, which can greatly improve the effect of buffering and shock absorption.

Furthermore, in this example, it can also be contemplated that the longitudinal sections of the elastic protrusion 84 and the recessed space 85 are respectively trapezoidal.

Furthermore, in this example, it can also be contemplated that the shockproof pad support rod 80 is arranged perpendicular to the arch-shaped shockproof pad body 79 and is fixedly connected to the middle of the lower end of the arch-shaped shockproof pad body 79.

Furthermore, in this example, it can also be contemplated that the limiting step 81 is a circular truncated structure with a larger upper size and a smaller lower size and extending outward along the radial direction of the shockproof pad support rod 80, and the limiting step 81 is compressible. The diameter of the upper end of the limiting step 81 is larger than the diameter of the limiting hole 83. When the shockproof pad structure is assembled with the shockproof seat structure, the shockproof pad support rod 80 is matched and inserted into the limiting hole 83, and the limiting step 81 is stuck under the limiting hole 83, so that the shockproof pad structure cannot be displaced in the vertical direction. The limiting step 81 is a compressible structure which can facilitate the assembly/disassembly of the shockproof pad structure and the shockproof seat structure.

Furthermore, in this example, it can also be contemplated that the shockproof seat structures are arranged at equal intervals along the outer edge of the upper cover bottom wall 203, and the shockproof seat body 82 is recessed downward from the upper surface of the upper cover bottom wall 203, and the shape of the shockproof seat body 82 is adapted to the shape of the arch-shaped shockproof pad body 79. The shockproof structures of the container cup are evenly distributed on the inner surface of the mainframe upper cover 2, which can improve the assembly stability of the container cup assembly.

Furthermore, in this example, it can also be contemplated that the upper edge of the shockproof seat body 82 also extends upward to form a circle of shockproof seat premier 86, so that the shockproof pad structure cannot be displaced in the horizontal direction.

### Example 11

As shown in FIGS. 46-51, the shockproof structure for the container cup also includes an upper clutch below the container cup assembly 37, and a lower clutch 87 assembled on the motor shaft of the motor 1. The upper clutch is a hexagram cylindrical structure, and the upper surface of the lower clutch 87 is recessed from the middle part to form a star-shaped cylindrical slot 88 for the upper clutch to be matched and inserted therein. A hollow washer 89 matched in shape is clamped between the upper clutch and the star-shaped cylindrical slot 88. In usage of the kitchen appliance, the container cup assembly 37 is assembled on the mainframe upper cover 2. At this time, the upper clutch is inserted into the hollow washer 89, and the upper clutch, the hollow washer 89 and the star-shaped cylindrical slot 88 are matched and fit with each other, implementing the power transmission connection among the blade assembly, the upper clutch, the lower clutch, and the motor, so that the power transmission connection between the upper and lower clutches has a soft rubber buffer, which can cooperate with the shockproof pad structure and the shockproof seat structure, and can further greatly reduce the noise and vibration of the whole machine during high-speed stirring, and provide a better user experience.

Wherein, the clutch assembly 3 includes an upper clutch and a lower clutch.

It should be noted that the upper clutch, the hollow washer 89, and the star-shaped cylindrical slot 88 being arranged in hexagram cylindrical structure can not only achieve high assembly stability and high concentricity, but also help reduce the noise and vibration of the whole machine. When the lower clutch is injection molded, the lower clutch can be designed with three equally spaced glue feeding points for injection molding, so that the size is stable and the concentricity is high during injection molding, which can further effectively reduce the vibration and noise generated by the blade holder.

### Example 12

As shown in FIGS. 46-51, a kitchen appliance includes a mainframe 14, a motor 1, a container cup assembly 37, a mainframe upper cover 2 being formed by recessing the upper surface of the mainframe housing for the container cup assembly 37 to be assembled, characterized in that the kitchen appliance is provided therein with a shockproof structure for a container cup applicable to a kitchen appliance of any of described above. When the kitchen appliance is in use, the container cup assembly 37 is put into the mainframe 14, the bottom edge of the container cup assembly 37 contacts and squeezes the upper end of the arch-shaped shockproof pad body 79, and the arch-shaped shockproof pad body 79 is designed as an arch shape, which can not only bear the weight but also have a certain elastic deformation, which can greatly reduce the noise and vibration of the whole machine. At this time, the upper clutch is inserted into the hollow washer 89, and the upper clutch, the hollow washer 89 and the star-shaped cylindrical slot 88 are matched and fit with each other, implementing the power transmission connection among the blade assembly, the upper clutch, the lower clutch, and the motor, so that the power transmission connection between the upper and lower clutches has a soft rubber buffer, which can cooperate with the shockproof pad structure and the shockproof seat structure, and can further greatly reduce the noise and vibration of the whole machine during high-speed stirring, and provide a better user experience.

In sum, the present disclosure provides a shockproof structure for a container cup applicable to a kitchen appliance and a kitchen appliance, which can greatly reduce the noise and vibration of the whole machine, and provide a better user experience.

The above examples can be combined in any manner as desired.

The present disclosure has been described in detail through the above examples, however, the disclosure is only preferred examples of the present disclosure and cannot be considered as limiting the scope of implementation of the present disclosure. All equal changes and improvements made in accordance with the scope of application of the present disclosure should still fall within the scope of the patent of the present disclosure.

## Claims

1. A kitchen appliance, comprising an overflow structure disposed in a mainframe of the kitchen appliance, a motor being assembled in the mainframe, wherein a mainframe upper cover (2) is disposed above the motor (1), and the mainframe upper cover (2) is connected to the mainframe as a whole piece and is used to place a container cup assembly of the kitchen appliance, a shaft of the motor (1) is connected to a clutch assembly (3) for power transmission, a base (4) is installed at a lower end of the mainframe, wherein the overflow structure comprises:
a mainframe-upper-cover drainage structure comprising at least one side drainage hole (5) opened at an edge of the mainframe upper cover (2), and a first water receiving part for transferring liquid in the side drainage hole (5);
an interference drainage structure comprising a water receiving tray (6) for receiving liquid overflowing from a gap between the clutch assembly (3) and the mainframe upper cover (2), and a second water receiving component for transferring liquid in the water receiving tray (6).

2. The kitchen appliance according to claim 1, wherein the first water receiving part comprises a base drainage pipe (7) vertically installed on the base (7), and a water receiving pipe (8) inserted into the upper end of the base drainage pipe (7), and a lower end of the side drainage hole (5) is tightly connected with an opening end of the water receiving pipe (8) through a transfer structure (9).

3. The kitchen appliance according to claim 2, wherein the transfer structure (9) comprises an inclined transfer bottom surface (901) formed by bending at least once along one side edge of the side drainage hole (5), a connecting surface (902) connected between the transfer bottom surface (901) and other edge of the drainage hole (5), and an opening end of the transfer structure (9) faces the water receiving pipe (8).

4. The kitchen appliance according to claim 1, wherein the water receiving tray (6) comprises a receiving tray surface (601) and a tray wall (602) extending upward along an edge of the receiving tray surface (601), one side of the tray wall (602) is formed with a water receiving notch (603), and a water guiding lip (604) extends downward from an edge of the receiving tray surface (601) below the water receiving notch (603).

5. The kitchen appliance according to claim 4, wherein the receiving tray surface (601) is provided with a first motor hole for the shaft of the motor to extend therethrough, and a first water retaining wall (605) extends upward from an edge of the first motor hole.

6. The kitchen appliance according to claim 4, wherein the second water receiving part comprises a base drainage pipe (7) vertically installed on the base (4), and the water guiding lip (604) is disposed right above the base drainage pipe (7) in the second water receiving part.

7. The kitchen appliance according to claim 1, wherein on the mainframe upper cover (2), there is provided a second motor hole for partially inserting the clutch assembly (3), and a circle of second water retaining wall (201) is formed by extending upward from an edge of the second motor hole.

8. The kitchen appliance according to claim 1, wherein a lower part of the clutch assembly (3) is formed with at least two coaxially arranged water retaining walls (301), and a lower end of an outer water retaining wall (301) is higher than a lower end of an inner water retaining wall (301).

9. The kitchen appliance according to claim 1, wherein the kitchen appliance further comprises: a safety link overflow structure disposed inside a safety link body (13), and the safety link body (13) is assembled inside the mainframe (14).

10. The kitchen appliance according to claim 9, wherein an upper trigger lever (22) and a lower trigger lever (23) are vertically formed on the upper and lower parts of the safety link body (13) respectively, and a trigger inclined surface (24) for triggering on/off of the micro switch is formed on one side of the safety link body (13).

11. The kitchen appliance according to claim 10, wherein an upper surface of the mainframe (14) is recessed downward to form the mainframe upper cover (2) for the container cup assembly to be assembled thereon, an avoiding hollow cylinder (25) is provided on the mainframe upper cover (2) for the upper trigger lever (22) to pass upward therethrough, and a drainage slit (17) is disposed between the avoiding hollow cylinder (25) and the upper trigger lever (22).

12. The kitchen appliance according to claim 11, wherein the safety link overflow structure comprises:
a water receiving groove (16) formed as a recess from an upper part of the safety link body (13), having a semi-closed bottom and disposed under a drainage slit (17), downward from the lower end of the drainage slit (17) a circle of water retaining wall (18) being formed;
a drainage hole (19) disposed at a lower part of the safety link body (13) and communicated with the water receiving groove (16) through an overflow channel (20); and
a drainage gap (21) disposed on the base (4).

13. The kitchen appliance according to claim 12, wherein the drainage hole (19) is provided at least one pair, the at least one pair of drainage holes (19) are disposed on two opposite sides of a lower part of the overflow channel (20), and a lower opening end of the water receiving groove (16) correspond to the overflow channel (20) and the drainage holes (19) up and down.

14. The kitchen appliance according to claim 12, wherein a plane where a lower end of the water retaining wall (18) is located is flush with a plane where an upper end of the water receiving groove (16) is located, or is located below a plane where an upper end of the water receiving groove (16) is located.

15. The kitchen appliance according to any one of claims 9-14, wherein each corner end of the base (4) is provided with an installation position for assembling a suction disc foot assembly (10), the installation position comprises: a via hole (1101) for the suction disc foot, the via hole (1101) penetrating the base (4) and for the suction disc foot assembly (10) suspended and inserted through the via hole (1101); and screw posts (1102) respectively fixed to a periphery of the via holes (1101) for the suction disc feet, and the drainage gap (21) is disposed between the suction disc foot assembly (10) and the via hole (1101) for the suction disc foot.

16. The kitchen appliance according to claim 1, wherein the kitchen appliance further comprises: a cover opening protection structure, a container cup (15) assembled on the mainframe (14), a screw lid (32) snapped on the container cup (15), a micro switch (30) and a handle shell (36) fixedly connected to one side of the container cup (15);
wherein the cover opening protection structure comprises:
a handle safety link (34), which can move up and down in the handle shell (36), comprises a link body (3401), a driving inclined surface (3402) and a driving rod (3403) respectively provided on an upper part and a lower part of the link body (3401);
a hook-type buckle (35), which is fixedly connected to a lower end of the screw lid (32), and has a buckle inclined surface (3501) formed at a lower part of the hook-type buckle (35) for driving the handle safety link (34) to move up and down; and
the micro switch (30), which is assembled inside the mainframe (14), and the driving rod (3403) drives an elastic piece (3001) of the micro switch (30) to be pressed down or bounced up through the safety link body (13) in the kitchen appliance.

17. The kitchen appliance according to claim 16, wherein the hook-type buckle (35) comprises a supporting portion (3502) and a trigger portion (3503) which are connected as one body, and the buckle inclined surface (3501) is formed at a lower part of the trigger part (3503), and one side of the buckle inclined surface (3501) is recessed to form a positioning slot (3504).

18. The kitchen appliance according to claim 17, wherein the handle shell (36) comprises a handle seat (3601), a handle cover (3602) assembled on the handle seat (3601), the handle seat (3601) is provided with a hollow working groove along a length direction of the handle seat (3601), the handle safety link (34) is disposed in the hollow working groove and can move up and down inside the hollow working groove, an upper part of the handle seat (3601) is provided with an opening (3603) for the trigger portion (3503) to enter therethrough, and a lower part of the handle seat (3601) is provided with a second via hole for the driving rod (3403) to freely extend therethrough.

19. The kitchen appliance according to claim 18, wherein at least two sliding slots (3405) are formed on the link body (3401) along a length direction of the link body (3401), and a first guiding wheel (3406) is engaged in the sliding slot (3405), the first guiding wheel (3406) is slidably connected with the sliding slot (3405), and the first guiding wheel (3406) is fixedly connected to the container cup (15) or the handle seat (3601).

20. The kitchen appliance according to claim 1, wherein the kitchen appliance comprises: a container cup fixing structure assembled on the mainframe upper cover (2) of the mainframe (14), the mainframe upper cover (2) is configured to assemble a container cup assembly (37) therein, the container cup fixing structure comprises locking buckle members (39) and a rotating ring (41);
a number of the locking buckle members (39) is at least three, and the locking buckle members (39) are evenly distributed on a periphery of the mainframe upper cover (2), the locking buckle member (39) comprises a locking buckle bracket (3901) and a locking buckle that can be extended or retracted on the locking buckle bracket (3901);
locking buckle openings (40) for the locking buckles to extend or retract therethrough are evenly provided on the mainframe upper cover (2);
the rotating ring (41) is rotatably assembled on a periphery of the mainframe upper cover (2), and is provided with a release lever (42) for turning the rotating ring (41) to rotate, and rotating ring bosses (43) for driving the locking buckles to retract.

21. The kitchen appliance according to claim 20, wherein the mainframe upper cover (2) comprises an upper cover side wall (202) in a cylindrical surface form, an upper cover bottom wall (203) closing at a lower part of the upper cover side wall (202), and a circle of upper cover outer edge (204) formed on an upper edge of the upper cover side wall (202) and extending outwards.

22. The kitchen appliance according to claim 21, wherein the rotating ring (41) has a ring structure, the rotating ring (41) is provided with at least three arc-shaped sliding slots (46) at equal intervals along a circumferential direction of the rotating ring (41), the arc-shaped sliding slot (46) is engaged with a second guiding wheel (47), the second guiding wheel (47) is slidably connected to the arc-shaped sliding slot (46) and the second guiding wheel (47) is fixedly connected to the upper cover outer edge (204).

23. The kitchen appliance according to claim 21, wherein an arc-shaped through slot is provided extending along a circumferential direction of the upper cover outer edge (204) and penetrating the upper cover outer edge (204), a lower end of the release lever (42) is fixedly connected to the rotating ring (41) through a connecting rod (48), and the connecting rod (48) is movably inserted into the arc-shaped through slot.

24. The kitchen appliance according to claim 1, wherein the kitchen appliance further comprises: a container cup assembly, a coupler fixing structure and a coupler, and the coupler fixing structure is configured to secure the coupler on a cup bottom structure of the container cup assembly, and the coupler fixing structure comprises:
a sealing structure, arranged on an end surface of the coupler which is attached to the cup bottom structure and used to close a gap between the coupler and the cup bottom structure; and
a connecting structure, the coupler and the cup bottom structure being fixedly connected through the connecting structure.

25. The kitchen appliance according to claim 24, wherein the sealing structure comprises at least one circle of sealing slot opened on an upper end face of the coupler and used for filling sealing element.

26. The kitchen appliance according to claim 24, wherein at least one circle of sealing annular slot for filling the sealing element is further formed on an upper end surface of the coupler, and the sealing annular slot surrounds a periphery of a punch hole.

27. The kitchen appliance according to claim 24, wherein the coupler fixing structure further comprises a positioning structure, and the positioning structure comprises at least a pair of positioning notch and positioning perimeter which are respectively arranged on the cup bottom cover and the coupler and are engaged and positioned with each other.

28. The kitchen appliance according to claim 1, wherein the kitchen appliance comprises a screw lid sealing structure and a screw lid (64), the screw lid sealing structure is assembled on the screw lid (64), an outer periphery of a bottom surface of the screw lid (64) has an outer edge of the lid (64), the bottom surface of the screw lid (64) is further provided with a circle of annular wall (65) integrally connected with the screw lid (64), and the screw lid sealing structure comprises:
a sealing ring assembly, comprising a sealing ring (66) sleeved on the annular wall (65), an upper bracket (67) arranged between the sealing ring (66) and the annular wall (65) for limiting everting of an upper part of the sealing ring (66), and a lower bracket (68) for compressing the sealing ring (66) and limiting displacement of the sealing ring (66), wherein an edge of the sealing ring (66) is formed with at least one layer of flange (6601) with a lower part everted, an outer edge of a free end of the flange (6601) is an R angle sealing portion (6602), and an inner edge of the free end of the flange (6601) is a parting line position (6603);
at least three assemblies of screw lids and screw buckles, and the assemblies are distributed at intervals on an inner side of the outer edge of the lid (64).

29. The kitchen appliance according to claim 28, wherein the lower bracket (68) comprises an annular connecting portion (6801), a second annular base portion (6802) and a third annular base portion (6803) respectively formed at an upper end and a lower end of the annular connecting portion (6801) and extending in opposite directions to each other, wherein the second annular base portion (6802) and the third annular base portion (6803) are parallel to each other, and are used to support the sealing ring (66) and the lower end of the annular wall (65) respectively.

30. The kitchen appliance according to claim 1, wherein a container cup shockproof structure applicable to the kitchen appliance is provided in the kitchen appliance, assembled in the mainframe upper cover (2) of the mainframe (14), the container cup shockproof structure comprises at least three shockproof structures evenly distributed in the mainframe upper cover (2), and the shockproof structure comprises:
a shockproof pad structure, comprising an arch-shaped shockproof pad body (79) and a shockproof pad support rod (80) which are formed integrally, and a limiting step (81) disposed on the shockproof pad support rod (80); and
a shockproof seat structure, integrally formed on an inner surface of the mainframe upper cover (2), and comprising a shockproof seat body (82) for receiving the arch-shaped shockproof pad body (79) and a limiting hole (83) for inserting the shockproof pad support rod (80).

31. The kitchen appliance according to claim 30, wherein the mainframe upper cover (2) is a cylindrical groove structure formed by a depression from an upper surface of the mainframe (14), the mainframe upper cover (2) comprises an upper cover side wall (202) in a cylindrical surface form, an upper cover bottom wall (203) closing at a lower part of the upper cover side wall (202), and a circle of upper cover outer edge (204) formed on an upper edge of the upper cover side wall (202) and extending outwards;
the shockproof seat structures are arranged at equal intervals along an outer edge of the upper cover bottom wall (203), and the shockproof seat body (82) is recessed downward from an upper surface of the upper cover bottom wall (203), and a shape of the shockproof seat body (82) is adapted to a shape of the arch-shaped shockproof pad body (79).

32. An overflow structure applicable to a kitchen appliance, disposed in a mainframe of the kitchen appliance, a motor being assembled in the mainframe, wherein a mainframe upper cover (2) is disposed above the motor (1), and the mainframe upper cover (2) is connected to the mainframe as a whole piece and is used to place a container cup assembly, a shaft of the motor (1) is connected to a clutch assembly (3) for power transmission, a base (4) is installed at a lower end of the mainframe, wherein the overflow structure comprises:
a mainframe-upper-cover drainage structure comprising at least one side drainage hole (5) opened at an edge of the mainframe upper cover (2), and a first water receiving part for transferring liquid in the side drainage hole (5);
an interference drainage structure comprising a water receiving tray (6) for receiving liquid overflowing from a gap between the clutch assembly (3) and the mainframe upper cover (2), and a second water receiving component for transferring liquid in the water receiving tray (6).

33. A safety link overflow structure applicable to a kitchen appliance, disposed inside a safety link body (13), the safety link body (13) being assembled inside a mainframe (14), a base (4) being installed at a lower end of the mainframe (14), wherein the safety link overflow structure comprises:
a water receiving groove (16) formed as a recess from an upper part of the safety link body (13), having a semi-closed bottom and disposed under a drainage slit (17), downward from the lower end of the drainage slit (17) a circle of water retaining wall (18) being formed;
a drainage hole (19) disposed at a lower part of the safety link body (13) and communicated with the water receiving groove (16) through an overflow channel (20); and
a drainage gap (21) disposed on the base (4).

34. A cover opening protection structure applicable to a kitchen appliance, assembled inside the kitchen appliance, the kitchen appliance comprising a mainframe (14), a container cup (15) assembled on the mainframe (14), a screw lid (32) snapped on the container cup (15), and a handle shell (36) fixedly connected to one side of the container cup (15), wherein the cover opening protection structure comprises:
a handle safety link (34), which can move up and down in the handle shell (36), comprises a link body (3401), a driving inclined surface (3402) and a driving rod (3403) respectively provided on an upper part and a lower part of the link body (3401);
a hook-type buckle (35), which is fixedly connected to a lower end of the screw lid (32), and has a buckle inclined surface (3501) formed at a lower part of the hook-type buckle (35) for driving the handle safety link (34) to move up and down; and
a micro switch (30), which is assembled inside the mainframe (14), and the driving rod (3403) drives an elastic piece (3001) of the micro switch (30) to be pressed down or bounced up through the safety link body (13).

35. A container cup fixing structure, assembled on the mainframe upper cover (2) of the mainframe (14), the mainframe upper cover (2) being configured to assemble a container cup assembly (37) therein, wherein the container cup fixing structure comprises
locking buckle members (39), wherein a number of the locking buckle members (39) is at least three, and the locking buckle members (39) are evenly distributed on a periphery of the mainframe upper cover (2), the locking buckle member (39) comprises a locking buckle bracket (3901) and a locking buckle that can be extended or retracted on the locking buckle bracket (3901); and
a mainframe upper cover (2), wherein locking buckle openings (40) for the locking buckles to extend or retract therethrough are evenly provided on the mainframe upper cover (2); and
a rotating ring (41), rotatably assembled on a periphery of the mainframe upper cover (2), and is provided with a release lever (42) for turning the rotating ring (41) to rotate, and rotating ring bosses (43) for driving the locking buckles to retract.

## Amended claims

### Amended claims under Art. 19.1 PCT

**1.** A kitchen appliance, comprising an overflow structure disposed in a mainframe of the kitchen appliance, a motor being assembled in the mainframe, wherein a mainframe upper cover (2) is disposed above the motor (1), and the mainframe upper cover (2) is connected to the mainframe as a whole piece and is used to place a container cup assembly of the kitchen appliance, a shaft of the motor (1) is connected to a clutch assembly (3) for power transmission, a base (4) is installed at a lower end of the mainframe, wherein the overflow structure comprises:
a mainframe-upper-cover drainage structure comprising at least one side drainage hole (5) opened at an edge of the mainframe upper cover (2), and a first water receiving part for transferring liquid in the side drainage hole (5);
an interference drainage structure comprising a water receiving tray (6) for receiving liquid overflowing from a gap between the clutch assembly (3) and the mainframe upper cover (2), and a second water receiving component for transferring liquid in the water receiving tray (6).

**2.** The kitchen appliance according to claim 1, wherein the first water receiving part comprises a base drainage pipe (7) vertically installed on the base (7), and a water receiving pipe (8) inserted into the upper end of the base drainage pipe (7), and a lower end of the side drainage hole (5) is tightly connected with an opening end of the water receiving pipe (8) through a transfer structure (9).

**3.** The kitchen appliance according to claim 2, wherein the transfer structure (9) comprises an inclined transfer bottom surface (901) formed by bending at least once along one side edge of the side drainage hole (5), a connecting surface (902) connected between the transfer bottom surface (901) and other edge of the drainage hole (5), and an opening end of the transfer structure (9) faces the water receiving pipe (8).

**4.** The kitchen appliance according to claim 1, wherein the water receiving tray (6) comprises a receiving tray surface (601) and a tray wall (602) extending upward along an edge of the receiving tray surface (601), one side of the tray wall (602) is formed with a water receiving notch (603), and a water guiding lip (604) extends downward from an edge of the receiving tray surface (601) below the water receiving notch (603).

**5.** The kitchen appliance according to claim 4, wherein the receiving tray surface (601) is provided with a first motor hole for the shaft of the motor to extend therethrough, and a first water retaining wall (605) extends upward from an edge of the first motor hole.

**6.** The kitchen appliance according to claim 4, wherein the second water receiving part comprises a base drainage pipe (7) vertically installed on the base (4), and the water guiding lip (604) is disposed right above the base drainage pipe (7) in the second water receiving part.

**7.** The kitchen appliance according to claim 1, wherein on the mainframe upper cover (2), there is provided a second motor hole for partially inserting the clutch assembly (3), and a circle of second water retaining wall (201) is formed by extending upward from an edge of the second motor hole.

**8.** The kitchen appliance according to claim 1, wherein a lower part of the clutch assembly (3) is formed with at least two coaxially arranged water retaining walls (301), and a lower end of an outer water retaining wall (301) is higher than a lower end of an inner water retaining wall (301).

**9.** The kitchen appliance according to claim 1, wherein the kitchen appliance further comprises: a safety link overflow structure disposed inside a safety link body (13), and the safety link body (13) is assembled inside the mainframe (14).

**10.** The kitchen appliance according to claim 9, wherein an upper trigger lever (22) and a lower trigger lever (23) are vertically formed on the upper and lower parts of the safety link body (13) respectively, and a trigger inclined surface (24) for triggering on/off of the micro switch is formed on one side of the safety link body (13).

**11.** The kitchen appliance according to claim 10, wherein an upper surface of the mainframe (14) is recessed downward to form the mainframe upper cover (2) for the container cup assembly to be assembled thereon, an avoiding hollow cylinder (25) is provided on the mainframe upper cover (2) for the upper trigger lever (22) to pass upward therethrough, and a drainage slit (17) is disposed between the avoiding hollow cylinder (25) and the upper trigger lever (22).

**12.** The kitchen appliance according to claim 11, wherein the safety link overflow structure comprises:
a water receiving groove (16) formed as a recess from an upper part of the safety link body (13), having a semi-closed bottom and disposed under a drainage slit (17), downward from the lower end of the drainage slit (17) a circle of water retaining wall (18) being formed;
a drainage hole (19) disposed at a lower part of the safety link body (13) and communicated with the water receiving groove (16) through an overflow channel (20); and
a drainage gap (21) disposed on the base (4).

**13.** The kitchen appliance according to claim 12, wherein the drainage hole (19) is provided at least one pair, the at least one pair of drainage holes (19) are disposed on two opposite sides of a lower part of the overflow channel (20), and a lower opening end of the water receiving groove (16) correspond to the overflow channel (20) and the drainage holes (19) up and down.

**14.** The kitchen appliance according to claim 12, wherein a plane where a lower end of the water retaining wall (18) is located is flush with a plane where an upper end of the water receiving groove (16) is located, or is located below a plane where an upper end of the water receiving groove (16) is located.

**15.** The kitchen appliance according to any one of claims 9-14, wherein each corner end of the base (4) is provided with an installation position for assembling a suction disc foot assembly (10), the installation position comprises: a via hole (1101) for the suction disc foot, the via hole (1101) penetrating the base (4) and for the suction disc foot assembly (10) suspended and inserted through the via hole (1101); and screw posts (1102) respectively fixed to a periphery of the via holes (1101) for the suction disc feet, and the drainage gap (21) is disposed between the suction disc foot assembly (10) and the via hole (1101) for the suction disc foot.

**16.** The kitchen appliance according to claim 1, wherein the kitchen appliance further comprises: a cover opening protection structure, a container cup (15) assembled on the mainframe (14), a screw lid (32) snapped on the container cup (15), a micro switch (30) and a handle shell (36) fixedly connected to one side of the container cup (15);
wherein the cover opening protection structure comprises:
a handle safety link (34), which can move up and down in the handle shell (36), comprises a link body (3401), a driving inclined surface (3402) and a driving rod (3403) respectively provided on an upper part and a lower part of the link body (3401);
a hook-type buckle (35), which is fixedly connected to a lower end of the screw lid (32), and has a buckle inclined surface (3501) formed at a lower part of the hook-type buckle (35) for driving the handle safety link (34) to move up and down; and
the micro switch (30), which is assembled inside the mainframe (14), and the driving rod (3403) drives an elastic piece (3001) of the micro switch (30) to be pressed down or bounced up through the safety link body (13) in the kitchen appliance.

**17.** The kitchen appliance according to claim 16, wherein the hook-type buckle (35) comprises a supporting portion (3502) and a trigger portion (3503) which are connected as one body, and the buckle inclined surface (3501) is formed at a lower part of the trigger part (3503), and one side of the buckle inclined surface (3501) is recessed to form a positioning slot (3504).

**18.** The kitchen appliance according to claim 17, wherein the handle shell (36) comprises a handle seat (3601), a handle cover (3602) assembled on the handle seat (3601), the handle seat (3601) is provided with a hollow working groove along a length direction of the handle seat (3601), the handle safety link (34) is disposed in the hollow working groove and can move up and down inside the hollow working groove, an upper part of the handle seat (3601) is provided with an opening (3603) for the trigger portion (3503) to enter therethrough, and a lower part of the handle seat (3601) is provided with a second via hole for the driving rod (3403) to freely extend therethrough.

**19.** The kitchen appliance according to claim 18, wherein at least two sliding slots (3405) are formed on the link body (3401) along a length direction of the link body (3401), and a first guiding wheel (3406) is engaged in the sliding slot (3405), the first guiding wheel (3406) is slidably connected with the sliding slot (3405), and the first guiding wheel (3406) is fixedly connected to the container cup (15) or the handle seat (3601).

**20.** The kitchen appliance according to claim 1, wherein the kitchen appliance comprises: a container cup fixing structure assembled on the mainframe upper cover (2) of the mainframe (14), the mainframe upper cover (2) is configured to assemble a container cup assembly (37) therein, the container cup fixing structure comprises locking buckle members (39) and a rotating ring (41);
a number of the locking buckle members (39) is at least three, and the locking buckle members (39) are evenly distributed on a periphery of the mainframe upper cover (2), the locking buckle member (39) comprises a locking buckle bracket (3901) and a locking buckle that can be extended or retracted on the locking buckle bracket (3901);
locking buckle openings (40) for the locking buckles to extend or retract therethrough are evenly provided on the mainframe upper cover (2);
the rotating ring (41) is rotatably assembled on a periphery of the mainframe upper cover (2), and is provided with a release lever (42) for turning the rotating ring (41) to rotate, and rotating ring bosses (43) for driving the locking buckles to retract.

**21.** The kitchen appliance according to claim 20, wherein the mainframe upper cover (2) comprises an upper cover side wall (202) in a cylindrical surface form, an upper cover bottom wall (203) closing at a lower part of the upper cover side wall (202), and a circle of upper cover outer edge (204) formed on an upper edge of the upper cover side wall (202) and extending outwards.

**22.** The kitchen appliance according to claim 21, wherein the rotating ring (41) has a ring structure, the rotating ring (41) is provided with at least three arc-shaped sliding slots (46) at equal intervals along a circumferential direction of the rotating ring (41), the arc-shaped sliding slot (46) is engaged with a second guiding wheel (47), the second guiding wheel (47) is slidably connected to the arc-shaped sliding slot (46) and the second guiding wheel (47) is fixedly connected to the upper cover outer edge (204).

**23.** The kitchen appliance according to claim 21, wherein an arc-shaped through slot is provided extending along a circumferential direction of the upper cover outer edge (204) and penetrating the upper cover outer edge (204), a lower end of the release lever (42) is fixedly connected to the rotating ring (41) through a connecting rod (48), and the connecting rod (48) is movably inserted into the arc-shaped through slot.

**24.** The kitchen appliance according to claim 1, wherein the kitchen appliance comprises a screw lid sealing structure and a screw lid (64), the screw lid sealing structure is assembled on the screw lid (64), an outer periphery of a bottom surface of the screw lid (64) has an outer edge of the lid (64), the bottom surface of the screw lid (64) is further provided with a circle of annular wall (65) integrally connected with the screw lid (64), and the screw lid sealing structure comprises:
a sealing ring assembly, comprising a sealing ring (66) sleeved on the annular wall (65), an upper bracket (67) arranged between the sealing ring (66) and the annular wall (65) for limiting everting of an upper part of the sealing ring (66), and a lower bracket (68) for compressing the sealing ring (66) and limiting displacement of the sealing ring (66), wherein an edge of the sealing ring (66) is formed with at least one layer of flange (6601) with a lower part everted, an outer edge of a free end of the flange (6601) is an R angle sealing portion (6602), and an inner edge of the free end of the flange (6601) is a parting line position (6603);
at least three assemblies of screw lids and screw buckles, and the assemblies are distributed at intervals on an inner side of the outer edge of the lid (64).

**25.** The kitchen appliance according to claim 24, wherein the lower bracket (68) comprises an annular connecting portion (6801), a second annular base portion (6802) and a third annular base portion (6803) respectively formed at an upper end and a lower end of the annular connecting portion (6801) and extending in opposite directions to each other, wherein the second annular base portion (6802) and the third annular base portion (6803) are parallel to each other, and are used to support the sealing ring (66) and the lower end of the annular wall (65) respectively.
